# EUROPÄISCHE PATENTSCHRIFT

(11) **EP 2 598 299 B1**
(45) Veröffentlichungstag und Bekanntmachung des Hinweises auf die Patenterteilung: **21.05.2014**
(21) Anmeldenummer: 11735669.1
(22) Anmeldetag: 26.07.2011
(51) Int. Cl.: B28C 7/00, F16H 57/02, F16H 57/031, F16H 57/04, F25D 25/04, F28C 3/12

(54) **MOBILE VORRICHTUNG UND VERFAHREN ZUR BETONHERSTELLUNG MIT KÜHLUNG VON SCHÜTTGUT**
MOBILE APPARATUS AND PROCESS FOR PRODUCING CONCRETE WITH COOLING OF LOOSE MATERIAL
APPAREIL MOBILE ET PROCÉDÉ DE FRABRICATION DE BÉTON AVEC REFROIDISSEMENT DE MATIÈRE EN VRAC

(30) Priorität: 29.07.2010 DE 202010010804 U
(43) Veröffentlichungstag der Anmeldung: 05.06.2013
(73) Patentinhaber: LINTEC GmbH & Co. KG, 21614 Buxtehude (DE)
(72) Erfinder: NEDERSTIGT, Matthias, 21614 Buxtehude (DE)
(74) Vertreter: Eisenführ Speiser
(86) Internationale Anmeldenummer: PCT/EP2011/062841
(87) Internationale Veröffentlichungsnummer: WO 2012/013684

(56) Entgegenhaltungen:
- FR-A1- 2 489 489
- JP-B- 7 055 493
- US-A- 2 595 631
- US-A- 3 686 773
- US-A- 3 839 803

## Beschreibung

Die Erfindung betrifft eine mobile Vorrichtung zur Betonherstellung mit einer Kühlungseinrichtung zur Kühlung von Schüttgut, insbesondere von Zuschlägen zur Betonherstellung, die Kühlungseinrichtung umfassend einen Schüttgutspeicher, eine Bewässerungseinrichtung und eine Luftzufuhreinrichtung.

Die Erfindung betrifft weiterhin ein Verfahren zur Betonherstellung bei dem Schüttgut, insbesondere Zuschläge zur Betonherstellung, gekühlt werden, wobei die Kühlung die Schritte umfasst: Speichern von Schüttgut, Bewässern von Schüttgut mit Wasser, Zuführen von Luft.

Die Erfindung betrifft weiterhin einen Nachrüstbausatz zur Ergänzung einer bestehenden Zuschlagverarbeitungsanlage, insbesondere einer Vorrichtung zur Betonherstellung mit einer Vorrichtung zur Kühlung von Schüttgut, insbesondere von Zuschlägen zur Betonherstellung.

Mobile Vorrichtungen zur Betonherstellung der eingangs genannten Art werden auch als mobile Betonanlagen bezeichnet. Sie werden bevorzugt auf Baustellen eingesetzt, bei denen große Mengen an Beton verarbeitet werden. Aus solchen Baustelle kann die Betonversorgung nicht oder nicht ausschließlich über angelieferten vorgemischten Fertigbeton sichergestellt werden, so dass frischer Beton vor Ort, d.h. auf der Baustelle oder in ihrer Nähe, in Betonanlagen hergestellt wird. Der vor Ort hergestellte Frischbeton wird dann üblicherweise von der Betonanlage zum Einsatzort innerhalb der Baustelle transportiert. Insbesondere auf Großbaustellen sind dabei oft auch längere Entfernungen zurückzulegen.

Die Herstellung von Beton vor Ort wird naturgemäß nur so lange benötigt, wie die Erstellung des jeweiligen Bauwerks bzw. Rohbaus dauert. Mit Fertigstellung des Bauwerks bzw. Rohbaus entfällt auch die Notwendigkeit zur Betonherstellung. Aus diesem Grund werden häufig mobile Vorrichtungen zur Betonherstellung eingesetzt, da die Lebensdauer solcher Betonanlagen im Allgemeinen höher ist als die Erstellungsdauer eines Bauwerks. Werden Vorrichtungen zur Betonherstellung als mobile Vorrichtungen ausgebildet, können sie daher nach Beendigung einer Baustelle in vorteilhafter Weise demontiert, zur nächsten Baustelle bzw. zum nächsten Einsatzort transportiert und dort wieder montiert und in Betrieb genommen werden. Aus diesem Grund ist es bevorzugt, dass die verschiedenen Komponenten einer mobilen Vorrichtung zur Betonherstellung einfach zu transportieren und auf- bzw. abzubauen sind, und vorzugsweise zumindest teilweise und zumindest während des Transports als genormte Container ausgebildet sind bzw. in solchen genormten Container untergebracht werden können. Solche mobilen Vorrichtungen zur Betonherstellung sind beispielsweise aus der DE 299 23 531 U1 und der WO 2001 01 411 5 A2 bekannt.

Die Einsatzgebiete für mobile Betonanlagen liegen überall dort, wo größere Baustellen mit einem hohen Bedarf an Frischbeton existieren. Dies ist praktisch weltweit der Fall, sodass mobile Betonanlagen unter sehr unterschiedlichen geografischen, klimatischen und wirtschaftlichen Bedingungen zum Einsatz kommen, wo auch die Verfügbarkeit verschiedener Ressourcen stark variieren kann.

In mobilen Betonanlagen wird - unter anderem - Schüttgut verarbeitet. In der Betonherstellung sind Schüttgüter üblicherweise Betonzuschlagsstoffe (auch als Betonzuschläge bezeichnet), wie beispielsweise Sand, Kies oder Split. Als Schüttgut wird hier ein granular, d. h. körnig oder stückig, vorliegendes Gut verstanden, das schüttfähig ist. Schüttgut besteht somit aus Feststoffpartikeln und einem Fluid (üblicherweise Luft), das die Hohlräume zwischen den Partikeln ausfüllt. Verschiedene Schüttgüter unterscheiden sich durch ihre Korngröße bzw. Korngrößenverteilung sowie durch die Schüttdichte und den Schüttwinkel. Die Schüttdichte ist dabei das Verhältnis des granularen Feststoffs des Schüttguts zu einem Fluid (bei Betonzuschlägen üblicherweise Luft), welches die Hohlräume zwischen den Partikeln ausfüllt, d. h. das Verhältnis von der Masse der Schüttgutpartikel zum insgesamt eingenommenen Schüttvolumen.

Der Baustoff Beton setzt sich hauptsächlich aus Wasser, Zement und Betonzuschlägen zusammen. Als Zuschläge kommen unterschiedliche Gesteine in unterschiedlicher Körnung bzw. Korngrößenverteilung zum Einsatz, häufig beispielsweise Sand, Kies oder Split. Beim Mischen und dem anschließenden Aushärten bzw. Abbinden von Beton reagieren Zement und Wasser miteinander, wobei Wärme entsteht. Die Intensität der Wärmeentwicklung hängt von verschiedenen Faktoren ab, insbesondere von der Art des verwendeten Zements, dem Wasserzementwert und der Geometrie des herzustellenden Bauteils. Bei Bauteilen mit einem großen Volumen im Verhältnis zu einer kleinen Oberfläche ist die Wärmeentwicklung beispielsweise besonders kritisch, da aufgrund der verhältnismäßig geringen Oberfläche auch nur wenig Wärme abgeführt werden kann. Je höher die beim Abbinden entstehenden Temperaturen sind, umso größer ist der bei der Abkühlung des Betons auf Umgebungstemperatur eintretende Schrumpfungseffekt, durch den die Betonqualität beispielsweise durch Rissbildung negativ beeinflusst werden kann. Dieser Effekt führt insbesondere in Regionen mit heißem Klima zu Schwierigkeiten, da dort neben den ohnehin auftretenden Temperatureffekten auch die Ausgangsstoffe bzw. der Frischbeton selbst bereits vor dem Aushärten eine hohe Temperatur haben. Zur Verbesserung der Betonqualität ist es daher bekannt, den Beton vor oder während des Abbindens zu kühlen und so zu hohe Temperaturen des Betons während dieser Phase zu verhindern.

Eine existierende, jedoch sehr aufwendige und teure Lösung sieht vor, den fertig gemischten Frischbeton mit flüssigem Stickstoff zu kühlen. Weiterhin ist bekannt, das dem Beton zuzugebende Wasser vorab zu kühlen. Die Kühlleistung ist hier jedoch beschränkt einerseits durch die Menge an Wasser, die dem Beton zugegeben werden kann und andererseits durch eine begrenzte minimale Wassertemperatur von ca. 0° Celsius. Um eine bessere Kühlleistung zu erreichen, kann dem Beton auch Eis statt Wasser zugegeben werden. Diese Möglichkeit ist jedoch ebenfalls sehr aufwendig und teuer, da in der mobilen Vorrichtung zu Betonherstellung dann auch eine Anlage zur Herstellung, Lagerung und Dosierung von Eis vorgehalten werden muss. Auch ist bei diesem Verfahren ebenfalls die Kühlleistung beschränkt durch die dem Beton maximal zuzugebende Menge Eis und die minimal noch wirtschaftlich zu erreichende Eistemperatur. Weiterhin sind Herstellung, Lagerung und Dosierung von Eis gerade unter sehr heißen klimatischen Bedingungen mit einem sehr hohen Energieverbauch verbunden.

Eine weitere Möglichkeit der Betonkühlung besteht darin, die Zuschläge bzw. Zuschlagstoffe vor dem Mischen des Betons zu kühlen. Auch hier ist es bekannt, die Zuschläge mit flüssigem Stickstoff zu kühlen. Wie die Kühlung des fertigen Frischbetons mit flüssigem Stickstoff ist dieses Verfahren jedoch sehr aufwendig und teuer.

Eine andere Möglichkeit ist die Kühlung der Zuschläge mit kalter Luft. Diese Variante hat jedoch einen sehr geringen Wirkungsgrad und somit einen sehr hohen Energieverbrauch. Für eine Kühlung der Zuschläge durch ein Wasserwärmetauschverfahren, bei dem die Zuschläge mit Wasser gekühlt werden, sind hohe Investitionen in eine entsprechende Anlage mit Förderbändern, Wasserzufuhr, Abwasserabfuhr und -filterung erforderlich. Dieser Nachteil wird noch dadurch verstärkt, dass für Zuschläge unterschiedlicher Korngröße jeweils ein separater Wärmetauscher bereitgestellt werden muss, um die unterschiedlichen Korngrößen später nicht wieder aufwändig in einer Siebanlage trennen zu müssen. Weiterhin ist es mit diesem Verfahren nicht möglich, auch feinkörnige Zuschläge, wie beispielsweise Sand, zu kühlen.

Aus der schwedischen Patentschrift SE 508 265 C2 ist als weitere Lösung bekannt, Zuschläge durch Verdunstung von Wasser zu kühlen. Das Prinzip der Verdunstungskühlung wird dabei auf die Zuschläge angewandt, indem der Zuschlag befeuchtet und von Luft durchströmt wird. Beim Verdunsten nimmt Wasser Energie auf, d.h. es erwärmt sich, der Zuschlag hingegen gibt Energie, d.h. Wärme, ab. In dem in der SE 508 265 C2 dargestellten Verfahren werden in einem Ballastbehälter bzw. Schüttgutspeicher befindliche Zuschläge durch eine Bewässerungseinrichtung von oben mit Wasser besprüht. Im Zuschlagbehälter ist eine Luftzufuhreinrichtung bestehend aus einer Rohrleitung mit Luftauslassöffnungen angeordnet, durch die Luft In den Zuschlagbehälter geblasen wird. Die Luft durchströmt die Zuschläge und tritt - erwärmt und mit einem höheren Feuchtegehalt - wieder aus. Diese Art der Verdunstungskühllung weist jedoch nur eine sehr geringe Kühlleistung auf und ist somit nur für gemäßigte klimatische Bedingungen geeignet. Weiterhin können feinkörnige Zuschläge wie beispielsweise Sand oder feiner Kies mit diesem Verfahren nicht oder nur unzureichend und ungleichmäßig gekühlt werden.

Aus der US 2,595,631 ist eine Betonmischanlage bekannt, welche Mittel zur Kühlung der zu mischenden Komponenten umfasst. Die JP 7 055493 B offenbart die effiziente Kühlung von Zuschlägen dadurch, dass befeuchtete Zuschlagsbestandteile einem Luftstrom ausgesetzt werden. Die FR 2 489 489 A1 beschreibt die Kühlung von heißem Material nach dessen Herstellung in einem Brennofen.

Die JP 3 151 211 B2 offenbart eine Vorrichtung und ein Verfahren zur Betonherstellung mit einer Kühlungseinrichtung zur Verdunstkühlung von Schüttgut, nämlich von Zuschlägen zur Betonherstellung, die Kühlungseinrichtung umfassend einen Schüttgutspeicher und eine Luftzufuhreinrichtung,
- wobei die Kühlungseinrichtung eine Schüttgutzufuhreinrichtung zur Zufuhr von Schüttgut in den Schüttgutspeicher über eine Schüttgutzufuhrstrecke aufweist, mit einem Schüttgutzufuhrschacht, der sich vom Schüttgutspeicher aus nach oben erstreckt, und in dem ein Zick-Zack-Vibrationsförderer angeordnet ist, wobei zuführendes Schüttgut auf mehreren Teilen der Schüttgutzufuhrstrecke auf einer Bewegungsbahn geführt wird, die einem im Wesentlichen freien Fall des Schüttguts entspricht,
- der Schüttgutspeicher bis auf den Ausgang durch den Schüttgutzufuhrschacht luftdicht geschlossen ist, so dass von der Luftzufuhreinrichtung eingeblasene Luft nur durch den im Schüttgutzufuhrschacht angeordneten Zick-Zack-Vibrationsförderer in einer der Schüttgutzufuhrstrecke entgegengesetzten Richtung wieder austreten kann.

Es ist daher die Aufgabe der vorliegenden Erfindung, eine Vorrichtung und ein Verfahren zur Betonherstellung mit Kühlung von Schüttgut sowie einen entsprechenden Nachrüstbausatz bereit zu stellen, durch die ein oder mehrere der genannten Nachteile verringert oder beseitigt werden.

Es ist insbesondere auch eine Aufgabe der vorliegenden Erfindung, eine Vorrichtung und ein Verfahren zur Betonherstellung mit Kühlung von Schüttgut sowie einen entsprechenden Nachrüstbausatz bereit zu stellen, die für den Einsatz unter besonders heißen klimatischen Bedingungen geeignet sind. Es ist weiterhin eine Aufgabe der vorliegenden Erfindung, eine Vorrichtung und ein Verfahren zur Betonherstellung mit Kühlung von Schüttgut sowie einen entsprechenden Nachrüstbausatz bereit zu stellen, die einen effizienten und effektiven Einsatz von Ressourcen ermöglicht. Insbesondere ist es eine Aufgabe der vorliegenden Erfindung eine Vorrichtung und ein Verfahren zur Betonherstellung mit Kühlung von Schüttgut sowie einen entsprechenden Nachrüstbausatz bereit zu stellen, die energiesparend sind. Es ist weiterhin eine Aufgabe der vorliegenden Erfindung, eine Vorrichtung und ein Verfahren zur Betonherstellung mit Kühlung von Schüttgut sowie einen entsprechenden Nachrüstbausatz bereit zu stellen, die wassersparend sind.

Diese Aufgabe wird erfindungsgemäß gelöst durch eine mobile Vorrichtung zur Betonherstellung gemäß Anspruch 1.

Erfindungsgemäß wird in der Kühlungseinrichtung das Schüttgut in den Schüttgutspeicher über eine Schüttgutzufuhreinrichtung eingeführt. Dabei legt das Schüttgut in dieser Schüttgutzuführeinrichtung eine Schüttgutzufuhrstrecke zurück. Im Gegensatz zu den aus dem Stand der Technik bekannten Lösungen, bei denen das Schüttgut im Schüttgutspeicher mit Wasser berieselt wird, sieht die erfindungsgemäße Lösung vor, dass das Schüttgut nicht erst im Schüttgutspeicher, sondern bereits in der Schüttgutzuführeinrichtung, genauer gesagt auf zumindest einem Teil der Schüttgutzufuhrstrecke, mit Wasser aus der Bewässerungseinrichtung in Kontakt kommt.

Der Erfindung liegt dabei die Erkenntnis zugrunde, dass für eine effektive und gleichmäßige Kühlung des Schüttguts eine möglichst gleichmäßige Durchfeuchtung des Schüttguts erforderlich ist. Eine solche möglichst gleichmäßige Durchfeuchtung des zu kühlenden Schüttguts wird erfindungsgemäß dadurch erreicht, dass das Schüttgut während der Zufuhr in den Schüttgutspeicher mit dem Wasser aus der Bewässerungseinrichtung befeuchtet wird. Während des Zuführvorgangs ist das Schüttgut wesentlich leichter gleichmäßig zu befeuchten als im Schüttgutspeicher selbst. Im Schüttgutspeicher befindliches Schüttgut ist - insbesondere bei kleiner Korngröße - regelmäßig dicht gepackt, d.h. es befindet sich wenig Raum zwischen den einzelnen Partikeln. Wird dieses Schüttgut im Schüttgutspeicher nun wie im Stand der Technik vorgeschlagen, mit Wasser berieselt, kommt es vor, dass - je nachdem, welchen Weg durch die Hohlräume zwischen den Partikeln das Wasser nimmt - nicht alle Bereiche des Schüttguts mit Wasser in Kontakt kommen. Je mehr Schüttgut im Schüttgutspeicher gelagert ist, desto größer sind die Durchfeuchtungsschwierigkeiten. Insbesondere im unteren Teil des Schüttgutspeichers befindliches Schüttgut wird bei den existierenden Lösungen meist nur unzureichend befeuchtet. Gerade Schüttgut mit einer sehr kleinen Korngrößenverteilung, wie beispielsweise feiner Sand, kann auf diese Weise nicht gleichmäßig durchfeuchtet werden und ist somit dem Verfahren einer Verdunstungskühlung nicht zugänglich.

Die erfindungsgemäße Vorrichtung löst diese Probleme durch die Befeuchtung der Schüttgutpartikel bei ihrer Zufuhr in den Schüttgutspeicher. Auf diese Weise ist das Schüttgut bereits gleichmäßig befeuchtet, wenn es in den Schüttgutspeicher gelangt, und die Durchfeuchtung des Schüttguts ist nicht mehr davon abhängig, wie gut das Wasser das im Schüttgutspeicher befindliche Schüttgut durchdringt und in welcher Position sich einzelne Schüttgutpartikel im Schüttgutspeicher befinden.

Die Erfindung hat somit einerseits den Vorteil, dass für sämtliche Schüttgüter eine gleichmäßigere und bessere Durchfeuchtung erreicht wird und damit auch eine gleichmäßigere und sowohl effektivere als auch effizientere Kühlung des Schüttguts erreicht wird. Ein weiterer Vorteil der Erfindung ist es, dass auch Zuschläge mit kleiner Korngröße, wie beispielsweise Sand oder feiner Kies, ebenfalls der Verdunstungskühlung zugänglich gemacht werden.

Die Erfindung kann dadurch fortgebildet werden, dass die Schüttgutzufuhreinrichtung derart ausgebildet und angeordnet ist, dass zuzuführendes Schüttgut zumindest auf dem Teil der Schüttgutzufuhrstrecke eine geringere Dichte aufweist als im Schüttgutspeicher befindliches Schüttgut, wobei die Dichte das Verhältnis von Schüttgutpartikeln zu Luft in einer Volumeneinheit bezeichnet.

Die eingangs beschriebene Schüttdichte von Schüttgut bezeichnet das Verhältnis von Masse der Schüttgutpartikel zu dem Volumen des Schüttguts, welches auch Luft einschließt. Diese Schüttdichte bezieht sich auf lagerndes Schüttgut, d.h. im vorliegenden Fall auf Schüttgut im Schüttgutspeicher. Während eines Schüttvorgangs bzw. eines Zuführvorgangs von Schüttgut kann das Schüttgut jedoch in deutlich aufgelockerterer Form vorliegen, d.h. die Dichte des Schüttguts ist dann geringer, da in einer Volumeneinheit dann weniger Schüttgutpartikel vorliegen als im Lagerzustand des Schüttguts. Erfindungsgemäß ist die Schüttgutzufuhreinrichtung so ausgebildet, dass auf der Schüttgutzufuhrstrecke das Schüttgut in einer geringeren Dichte vorliegt als im Schüttgutspeicher, d.h. dass die Schüttgutpartikel auf der Schüttgutzufuhrstrecke weiter voneinander entfernt sind und sich mehr bzw. größere, luftgefüllte Hohlräume zwischen den Schüttgutpartikeln befinden als bei im Schüttgutspeicher gelagertem Schüttgut.

Auf diese Weise wird die Befeuchtung des Schüttguts auf zumindest einem Teil der Schüttgutzufuhrstrecke erleichtert, da das aus der Bewässerungseinrichtung austretende Wasser bei geringerer Dichte des Schüttguts leichter in die Zwischenräume zwischen den Schüttgutpartikeln gelangen kann. So wird eine besonders gleichmäßige Durchfeuchtung auch von Schüttgut mit kleiner Korngröße erreicht.

Weiterhin ist es bevorzugt, dass die Schüttgutzufuhreinrichtung eine Schüttgutauflockerungsvorrichtung umfasst, die ausgebildet und angeordnet ist, die Dichte von zuzuführendem Schüttgut gegenüber der Schüttgutdichte von Schüttgut im Schüttgutspeicher zu verringern.

Besonders bevorzugt ist es, dass die Schüttgutauflockerungsvorrichtung als Vibrationsföderer ausgebildet ist. Vorzugsweise wird das Schüttgut in der Schüttgutzufuhreinrichtung auf zumindest einem Teil der Schüttgutzufuhrstrecke durch die Schüttgutauflockerungsvorrichtung gefördert. Auf einem bevorzugten Vibrationsföderer wird das Schüttgut auf einem Förderband verteilt, wodurch sich die Dichte des Schüttguts gegenüber der Schüttdichte im Schüttgutspeicher reduziert und somit eine gleichmäßigere und zuverlässigere Durchfeuchtung des Schüttguts ermöglicht wird, wenn es in der durch den Vibrationsföderer aufgelockerten Form mit Wasser aus der Bewässerungseinrichtung in Kontakt kommt.

Die Erfindung kann dadurch fortgebildet werden, dass die Schüttgutzufuhreinrichtung derart ausgebildet und angeordnet ist, dass zuzuführendes Schüttgut zumindest auf dem Teil der Schüttgutzufuhrstrecke auf einer Bewegungsbahn geführt wird, die einen vertikalen Bewegungsanteil aufweist, wobei vorzugsweise die Bewegungsbahn einem freien Fall des Schüttguts entspricht.

Eine besonders vorteilhafte Ausgestaltung der Erfindung liegt darin, dass das Schüttgut eine zumindest anteilig vertikale Bewegung auf dem Teil der Schüttgutzufuhrstrecke durchführt. Besonders bevorzugt ist dabei ein zumindest abschnittsweise freier Fall der Schüttgutpartikel. Durch einen zumindest teilweise vertikalen Bewegungsanteil des Schüttguts auf dem Teil der Schüttgutzufuhrstrecke wird in besonders einfacher Weise eine Auflockerung bzw. Dichtereduzierung des Schüttguts erreicht, wodurch die Befeuchtung des Schüttguts mit Wasser aus der Bewässerungseinrichtung, einfach, zuverlässig und gleichmäßig sichergestellt werden kann.

Insbesondere ist es bevorzugt, dass zuzuführendes Schüttgut auf mehreren Teilen der Schüttgutzufuhrstrecke jeweils auf einer Bewegungsbahn geführt wird, die einen vertikalen Bewegungsanteil aufweist, wobei vorzugsweise die jeweilige Bewegungsbahn einem im Wesentlichen freien Fall des Schüttguts entspricht. Weiterhin ist es besonders bevorzugt, dass dazu ein, zwei oder mehrere im Wesentlichen waagerechte Böden mit zwischen den Böden angeordneten Fallstrecken vorgesehen sind. Weiterhin ist es besonders bevorzugt, dass die Schüttgutzuführeinrichtung einen Zick-Zack-Vibrationsförderer aufweist, der einen zwei oder mehrere im Wesentlichen waagerechte Böden mit zwischen den Böden angeordneten Fallstrecken umfasst.

Mit der auf diese Weise erzielten gegenläufigen Strömungs- bzw. Bewegungsrichtung von Luft und Schüttgut und die vertikalen Bewegungsanteile des Schüttguts auf mehreren Teilen der Schüttgutzufuhrstrecke wird eine besonders gute Umströmung der Schüttgutpartikel und damit eine besonders effiziente und effektive Kühlung erreicht.

Die Erfindung kann dadurch fortgebildet werden, dass die Schüttgutzufuhreinrichtung einen Schüttgutzufuhrschacht umfasst, der sich vom Schüttgutspeicher aus schräg oder senkrecht nach oben erstreckt.

In einer bevorzugten Ausgestaltung der Erfindung weist die Schüttgutzufuhreinrichtung einen Schüttgutzufuhrschacht auf, durch den von oben Schüttgut in den Schüttgutspeicher zugeführt werden kann. Eine Ausrichtung des Schüttgutzufuhrschachts im Wesentlichen oder teilweise nach oben (senkrecht oder schräg) hat den Vorteil, dass auf diese Weise ein vertikaler Bewegungsanteil des Schüttguts auf der Schüttgutzufuhrstrecke sichergestellt wird. Besonders bevorzugt ist es, dass der Schüttgutzufuhrschacht einen Teil der Schüttgutzufuhrstrecke bildet. Weiterhin ist es besonders bevorzugt, dass eine Schüttgutauflockerungsvorrichtung, beispielsweise ein Vibrationsföderer, in der Schüttgutzuführeinrichtung vor dem Schüttgutzufuhrschacht angeordnet ist. Der Schüttgutzufuhrschacht kann als Rohrleitung ausgebildet sein und beispielsweise einen runden oder eckigen Querschnitt aufweisen. Ein erfindungsgemäßer Schüttgutzuführschacht ist vorzugsweise sehr robust und verschleißarm, was im Einsatzgebiet von Baustellen und für die Verarbeitung von Schüttgut besonders vorteilhaft ist.

Diese Fortbildungsform ist insbesondere bevorzugt in Kombination mit der zuvor beschriebenen Fortbildungsform, wobei sich die mehreren Teile der Schüttgutzufuhrstrecke mit Bewegungsbahnen mit vertikalen Bewegungsanteilen vorzugsweise im Schüttgutzufuhrschacht befinden und ggf. auch ein Vibrationsförderer im Schüttgutzufuhrschacht angeordnet ist.

Die Erfindung wird weiter bevorzugt fortgebildet durch eine Luftkühlvorrichtung zur Kühlung der mittels der Luftzufuhreinrichtung zuzuführenden Luft.

Besonders bevorzugt ist es, dass die Luft, die der Kühlungseinrichtung durch die Luftzufuhreinrichtung zugeführt wird, vor dem Zuführen in einer Luftkühlvorrichtung gekühlt wird. Je kälter dabei die zugeführte Luft ist, desto höher ist die Kühlleistung der Kühlungseinrichtung und desto stärker wird das Schüttgut gekühlt. Auf diese Weise wird erreicht, dass die Erfindung auch in Ländern mit sehr heißem Klima einsetzbar ist, wo eine entsprechend starke Kühlung der Zuschläge erforderlich ist. In diesen Ländern wird durch die Verdunstungskühlung ohne gekühlte Luft meist nur eine unzureichende Kühlung erzielt, so dass die Verdunstungskühlung dort nicht eingesetzt werden kann. Ohne eine Vorkühlung der zuzuführenden Luft ist das Prinzip der Verdunstungskühlung unter solchen heißen klimatischen Bedingungen nicht sinnvoll einsetzbar. Die Fortbildung bietet damit den Vorteil, die Verdunstungskühlung von Schüttgut auch sehr heißen Ländern einsetzbar zu machen. Ein weiterer Vorteil der erfindungsgemäßen Lösung ist es, dass die Luft direkt vor dem Zuführen gekühlt werden kann und keine aufwendigen Anlagen zur Herstellung und Lagerung von beispielsweise Eis oder flüssigem Stickstoff erforderlich sind. Zwar kann eine vorgeschaltete Kühlung der zuzuführenden Luft den Energieverbrauch der Schüttgutkühlung erhöhen, jedoch stellt die erfindungsgemäße Lösung gegenüber anderen existierenden Möglichkeiten zur Schüttgutkühlung auch mit diesem erhöhten Energiebedarf eine sehr effiziente Lösung dar.

Die Erfindung kann dadurch fortgebildet werden, dass die Luftkühlvorrichtung eine Lufttrocknungsvorrichtung zur Trocknung der mittels der Luftzufuhreinrichtung zuzuführenden Luft umfasst.

Eine weitere Möglichkeit zur Steigerung der Kühlleistung besteht darin, die der Kühlungseinrichtung durch die Luftzufuhreinrichtung zuzuführende Luft vor der Zuführung zu trocknen. Je trockener die zuzuführende Luft ist, desto höher ist die Kühlungsleistung beim Prinzip der Verdunstungskühlung. Eine Lufttrocknung kann ebenso wie die Luftkühlung direkt vor der Zufuhr der Luft vorgenommen werden, so dass auch hier keine Investitionen in eine Anlage zur Herstellung und Vorhaltung von beispielsweise Eis oder Stickstoff erforderlich ist. Die Fortbildung ermöglicht es somit, durch die Steigerung der Kühlungsleistung die Verdunstungskühlung auch in Regionen einzusetzen, die sehr heiße klimatische Randbedingungen aufweisen.

Dabei ist es insbesondere bevorzugt, die zuzuführende Luft vor der Zuführung sowohl zu kühlen als auch zu trocknen. Die Vorteile dieser beiden Ausführungsvarianten ergänzen sich und verstärken sich gegenseitig, so dass in der Kombination von Luftkühlung und Lufttrocknung eine besonders bevorzugte Variante liegt. Dabei ist es weiterhin bevorzugt, dass die Luftkühlvorrichtung nicht nur zur Kühlung der zuzuführenden Luft sondern auch zu deren Trocknung mittels einer Trocknungsvorrichtung ausgebildet ist. Alternativ können eine Lufttrocknungsvorrichtung und eine Luftkühlvorrichtung auch getrennt voneinander ausgebildet und hintereinander geschaltet sein.

Die Erfindung wird bevorzugt durch eine Luftabfuhreinrichtung fortgebildet.

Die der Kühlungseinrichtung zugeführte Luft durchströmt das durchfeuchtete Schüttgut bzw. umströmt die befeuchteten Schüttgutpartikel und tritt anschließend - erwärmt und mit einer höheren Luftfeuchtigkeit - wieder aus der Kühlungseinrichtung aus. Es ist dabei bevorzugt, dass die austretende Luft zumindest teilweise durch eine Luftabfuhreinrichtung aufgenommen wird. Dies hat den Vorteil, dass die abzuführende Luft gezielt aufgenommen und damit einer weiteren Verwendung oder einer gezielten Abfuhr bzw. Entsorgung zugänglich gemacht werden kann.

Die Erfindung kann dadurch fortgebildet werden, dass die Bewässerungseinrichtung, die Luftabfuhreinrichtung und die Luftkühlvorrichtung derart angeordnet und ausgebildet sind, dass ein Luftauslass der Luftabfuhreinrichtung mit einem Lufteinlass der Luftkühlvorrichtung verbunden und ein Wasserauslass der Luftkühlvorrichtung mit einem Wassereinlass der Bewässerungseinrichtung verbunden ist.

Insbesondere in heißen Regionen und/oder in Regionen mit Wasserknappheit ist der sparsame Umgang mit der Ressource Wasser von besonderer Bedeutung bei der Kühlung von Schüttgut. Es ist daher gemäß dieser Fortbildungsform bevorzugt, die Abluft zu kühlen und das dabei kondensierende Wasser der Vorrichtung wieder zuzuführen. Auf diese Weise kann zumindest ein Teil des der Vorrichtung zugeführten Wassers über die Kühlung der Abluft wiedergewonnen werden, so dass die Vorrichtung deutlich weniger Wasser verbraucht. Bei der Wasserrückgewinnung durch Kühlung der Abluft ist - anders als beispielsweise bei der Wasserrückgewinnung bei einer direkten Wasserkühlung der Zuschläge durch einen direkten Wärmeaustausch zwischen Wasser und Zuschlägen-auch keine aufwändige Aufbereitung des bei der Kühlung und Trocknung wiedergewonnenen Abwassers erforderlich, da das Abwasser in der Abluft als Wasserdampf vorliegt und somit keine bzw. kaum zu filternde Schwebstoffe oder ähnliches enthält.

Die Erfindung kann dadurch fortgebildet werden, dass die Luftzufuhreinrichtung, die Luftabfuhreinrichtung und die Luftkühlvorrichtung derart angeordnet und ausgebildet sind, dass ein Luftauslass der Luftabfuhreinrichtung mit einem Lufteinlass der Luftkühlvorrichtung verbunden und ein Luftauslass der Luftkühlvorrichtung mit einem Lufteinlass der Luftzufuhreinrichtung verbunden ist.

Diese Fortbildungsform sieht vor, dass abgeführte Abluft aus der Kühlungseinrichtung der Kühlungseinrichtung über die Luftzufuhreinrichtung zumindest teilweise wieder zugeführt und dazwischen gekühlt und/oder getrocknet wird. Diese Fortbildungsform hat den Vorteil, dass ein Luftkreislauf gebildet wird, bei dem die bei der Kühlung eingesetzte Luft zumindest teilweise wiederverwendet wird. Ein weiterer Vorteil dieser Erfindung ist es, dass über die Luftabfuhreinrichtung nicht nur die eingesetzte Luft bzw. ein Teil davon wiedergewonnen und einer weiteren Verwendung zugänglich gemacht wird, sondern auch das als Wasserdampf in dieser Abluft vorhandene zugeführte Wasser zumindest teilweise nicht an die Umgebung abgegeben sondern durch die Luftabfuhreinrichtung aufgefangen wird. Durch die Kühlung und Trocknung der Abluft kann auch zumindest ein Teil des Wassers wiedergewonnen und einer weiteren Verwendung zugänglich gemacht werden. Durch die erforderliche Kühlung und Trocknung der warmen, relativ feuchten Abluft wird zwar der Energieverbrauch erhöht, gleichzeitig jedoch die Möglichkeit geschaffen, das zugeführte Wasser wiederzugewinnen und weiterzuverwenden. Insbesondere in Einsatzgebieten mit Wasserknappheit ist diese Variante besonders vorteilhaft. Bei der Wasserrückgewinnung durch Kühlung der Abluft ist - anders als beispielsweise bei der Wasserrückgewinnung bei einer direkten Wasserkühlung der Zuschläge durch einen direkten Wärmeaustausch zwischen Wasser und Zuschlägen - auch keine aufwändige Aufbereitung des bei der Kühlung und Trocknung wiedergewonnenen Abwassers erforderlich, da das Abwasser in der Abluft als Wasserdampf vorliegt und somit keine bzw. kaum zu filternde Schwebstoffe oder ähnliches enthält. Diese Fortbildungsform ist insbesondere bevorzugt, wenn die abgeführte Abluft eine niedrigere Temperatur aufweist als die Umgebungsluft.

Die Erfindung wird bevorzugt fortgebildet durch eine Wasserkühlvorrichtung zur Kühlung des mittels der Bewässerungseinrichtung zuzuführenden Wassers.

Eine weitere Möglichkeit zur Erhöhung der Kühlungsleistung ist es, das zuzuführende Wasser vor der Zufuhr zu kühlen. Je kälter das zuzuführende Wasser ist, desto höher ist die Kühlungsleistung der Verdunstungskühlung. Die Vorteile dieser Fortbildungsform kommen insbesondere in Anwendungsgebieten zum Einsatz, in denen aufgrund besonders warmer klimatischer Bedingungen erhöhte Kühlungsanforderungen bestehen oder wenn aus der Abluft gewonnenes warmes Abwasser der Bewässerungseinrichtung wieder zugeführt werden soll und vorher zu kühlen ist.

Die Erfindung wird vorzugsweise dadurch fortgebildet, dass die Luftkühlvorrichtung und die Bewässerungseinrichtung derart angeordnet und ausgebildet sind, dass ein Wasserauslass der Luftkühlvorrichtung mit einem Wassereinlass der Bewässerungseinrichtung verbunden ist, wobei vorzugsweise der Wasserauslass der Luftkühlvorrichtung über eine Wasserkühlvorrichtung mit dem Wassereinlass der Bewässerungseinrichtung verbunden ist.

Diese bevörzugte Fortbildung der Erfindung sieht vor, dass ein Wasserkreislauf vorgesehen ist, bei dem das beim Kühlen und/oder Trocknen der Abluft anfallende Wasser zumindest teilweise der Bewässerungseinrichtung wieder zugeführt wird. Besonders bevorzugt ist es dabei, dass das beim Kühlen bzw. Trocknen der Abluft gewonnene Wasser zunächst gekühlt wird, bevor es der Bewässerungseinrichtung wieder zugeführt wird.

Die Erfindung wird vorzugsweise fortgebildet durch einen Wasserkühlkreislauf, in dem die folgenden Komponenten in Reihe angeordnet sind: ein Frischwassertank, vorzugsweise ein Vorkühler, ein Chiller, ein Kaltwassertank und eine Luftkühlvorrichtung, wobei der Wasserkühlkreislauf und seine Komponenten derart ausgebildet und angeordnet sind, dass ein Wassereinlass der Luftkühlvorrichtung mit einem Wasserauslass des Kaltwassertanks verbunden ist und/oder ein Wasserauslass der Luftkühlvorrichtung mit einem Wassereinlass des Frischwassertanks verbunden ist und/oder ein Wasserauslass des Kaltwassertanks mit einem Wassereinlass der Bewässerungseinrichtung verbunden ist.

Insbesondere in heißen Regionen und/oder in Regionen mit Wasserknappheit ist eine effiziente Wasserkühlung von besonderer Bedeutung bei der Kühlung von Schüttgut. Die Anordnung hat sich dabei als besonders vorteilhaft erwiesen. Sie wird im Folgenden beispielhaft erläutert, wobei sich die genannten Temperatur- und Luftfeuchtigkeitsangaben auf Rahmenbedingungen beziehen, bei dem in der Umgebung gelagerte Zuschläge eine Temperatur von ca. 40-50C haben und die Umgebungsluft eine Temperatur von ca. 30-45°C mit einer relativen Feuchte von ca. 50-70% aufweist. Die Abluft aus der Kühlungseinrichtung hat unter entsprechenden klimatischen Bedingungen eine Temperatur von ca. 40-50°C mit einer relativen Feuchte von nahezu 100%.

Durch die erfindungsgemäße Vorrichtung, insbesondere mit dieser bevorzugten Fortbildungsform, kann das Schüttgut von einer Ausgangstemperatur von etwa 40-50°C auf eine Temperatur von ca. 15-25°C oder weniger heruntergekühlt werden.

In einem Frischwassertank wird Wasser mit einer Temperatur von ca. 35°C bis 45°C bereitgestellt und optional, insbesondere bei einer Wassertemperatur von über 30°C, ein Vorkühler dem Frischwassertank nachgeschaltet, in dem das Frischwasser auf eine Temperatur von unter 30°C heruntergekühlt wird. Dem Vorkühler - oder in Varianten ohne Vorkühler direkt dem Frischwassertank - nachgeschaltet ist ein sogenannter Chiller, in dem das Wasser auf eine Temperatur von ca. 5-15°C heruntergekühlt und von dort in einen Kaltwassertank mit einer Wassertemperatur von ca. 4 bis 15°C gespeist wird. Besonders bevorzugt ist es, dass zwischen dem Kaltwassertank und dem Chiller ein sogenannter Subcooling-Kreislauf ausgebildet ist, bei dem Wasser aus dem Kaltwassertank nochmals dem Chiller zur weiteren Kühlung zugeführt wird.

Aus dem Kaltwassertank wird nun Wasser einerseits für die Bewässerungseinrichtung und andererseits für die Luftkühlung entnommen. Der Luftkühlvorrichtung wird entweder Außen- bzw. Umgebungsluft zugeführt oder - bei einer Variante mit Wasserrückgewinnung - Abluft aus der Kühlungseinrichtung zugeführt. In diesem Fall wird das bei der Luftkühlung bzw. -trocknung aus der Abluft gewonnene Wasser mit einer Temperatur von ca. 30-40°C anschließend dem Frischwassertank zugeführt und - sollte die aus der Abluft gewonnene Wassermenge nicht ausreichen - mit zusätzlich zugeführtem Frischwasser im Frischwassertank vermischt.

Ein weiterer Aspekt der Erfindung ist ein eingangs genanntes Verfahren zur Betonherstellung gemäß Anspruch 10.

Das erfindungsgemäße Verfahren kann fortgebildet werden nach den Ansprüchen 11 bis 14 Diese fortgebildeten Verfahren weisen Merkmale bzw. Verfahrensschritte aus, die sie insbesondere dafür geeignet machen, für eine erfindungsgemäße Vorrichtung und ihre Fortbildungen verwendet zu werden. Zu den Ausführungsformen, spezifischen Merkmalen, Varianten und Vorteilen der Merkmale dieses Verfahrens und der Verfahrensfortbildungen wird auf die vorangegangene Beschreibung zu den entsprechenden Vorrichtungsmerkmalen verwiesen.

Ein weiterer Aspekt der Erfindung ist ein eingangs genannter Nachrüstbausatz zur Ergänzung einer bestehenden Zuschlagverarbeitungsanlage, der dadurch gekennzeichnet ist, dass der Nachrüstbausatz Nachrüstkomponenten aufweist, die den Merkmalen der erfindungsgemäßen Kühlungseinrichtung zur Kühlung von Schüttgut wie zuvor beschrieben entsprechen.

Der Erfindungsgedanke ist nicht auf neu zu errichtende mobile Vorrichtungen zur Betonherstellung begrenzt, sondern kann in vorteilhafter Weise auch für die Nachrüstung existierender mobiler oder stationärer Vorrichtungen zur Betonherstellung eingesetzt werden. Insbesondere aufgrund der langen Lebensdauer von Betonanlagen, deren hohem Investitionsvolumen und der großen Anzahl von Bestandsanlagen ist es vorteilhaft, die mit der Erfindung verbundenen Vorteile auch durch die Bereitstellung eines Nachrüstbausatzes für existierende Betonanlagen verfügbar zu machen. Besonders vorteilhaft ist der Einsatz in mobilen Betonanlagen, da diese meist modular aufgebaut sind und daher ein Nachrüstbausatz als weiteres Modul leicht zu integrieren ist. Besonders bevorzugt ist es, den Nachrüstbausatz in einem oder mehreren genormten Containern bereitzustellen, sodass der Nachrüstbausatz einfach zu transportieren ist.

Der erfindungsgemäße Nachrüstbausatz kann fortgebildet werden mit den Merkmalen der zuvor beschriebenen Kühlungseinrichtung zur Kühlung von Schüttgut, insbesondere von Zuschlägen zur Betonherstellung, in einer Vorrichtung zur Betonherstellung. Zu den Ausführungsformen, spezifischen Merkmalen, Varianten und Vorteilen der Merkmale dieses Nachrüstbausatzes und seiner Fortbildungen wird entsprechend auf die vorangegangene Beschreibung zu den jeweiligen Vorrichtungsmerkmalen verwiesen.

Eine bevorzugte Ausführungsform der Erfindung wird beispielhaft anhand der beiliegenden Figuren beschrieben. Es zeigen:
- Figur 1:: eine dreidimensionale Ansicht einer schematischen Darstellung einer ersten beispielhaften Ausführungsform einer Kühlungseinrichtung für eine mobile Vorrichtung zur Betonherstellung;
- Figur 2:: eine Draufsicht auf die Kühlungseinrichtung nach Figur 1;
- Figur 3:: einen Schnitt entlang der Schnittebene A-A in Figur 2 durch die Kühlungseinrichtung nach Figur 1;
- Figur 4:: eine Rückansicht der Kühlungseinrichtung nach Figur 1;
- Figur 5:: eine Vorderansicht der Kühlungseinrichtung nach Figur 1;
- Figur 6:: einen Querschnitt durch die Kühlungseinrichtung nach Fig. 1 mit weiteren Komponenten einer mobilen Vorrichtung zur Betonherstellung;
- Figur 7:: eine Vergrößerung eines Ausschnitts aus Figur 6;
- Figur 8:: eine Draufsicht auf eine zweite beispielhafte Ausführungsform einer Kühlungseinrichtung für eine mobile Vorrichtung zur Betonherstellung;
- Figur 9:: einen Schnitt entlang der Schnittebene A-A in Figur 8;
- Figur 10:: eine Rückansicht der zweiten beispielhaften Ausführungsform einer Kühlungseinrichtung;
- Figur 11:: eine Vorderansicht der zweiten beispielhaften Ausführungsform einer Kühlungseinrichtung;
- Figur 12:: einen Querschnitt durch die zweite beispielhafte Ausführungsform einer Kühlungseinrichtung mit weiteren Komponenten einer mobilen Vorrichtung zur Betonherstellung;
- Figur 13:: eine Vergrößerung eines Ausschnitts aus Figur 12;
- Figur 14:: eine beispielhafte Ausführungsform eines Teils einer erfindungsgemäßen mobilen Vorrichtung zur Betonherstellung in dreidimensionaler schematischer Ansicht;
- Figur 15:: eine weitere dreidimensionale Ansicht des Teils der mobilen Vorrichtung zur mobilen Betonherstellung gemäß Figur 14;
- Figur 16:: eine schematische Darstellung einer beispielhaften Ausführungsform eines erfindungsgemäßen Kühlkreislaufs ohne Wasserrückgewinnung;
- Figur 17:: eine schematische Darstellung einer beispielhaften Ausführungsform eines erfindungsgemäßen Kühlkreislaufs mit Wasserrückgewinnung;
- Figur 18:: ein schematische, vergrößerte Darstellung der Luftkühlvorrichtung aus Figur 16; und
- Figur 19:: ein schematische, vergrößerte Darstellung der Luftkühlvorrichtung aus Figur 17.

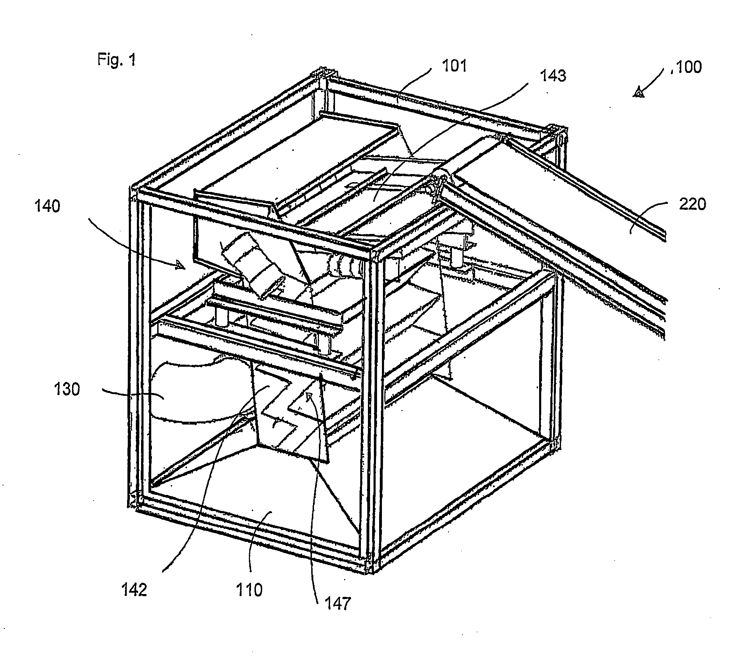

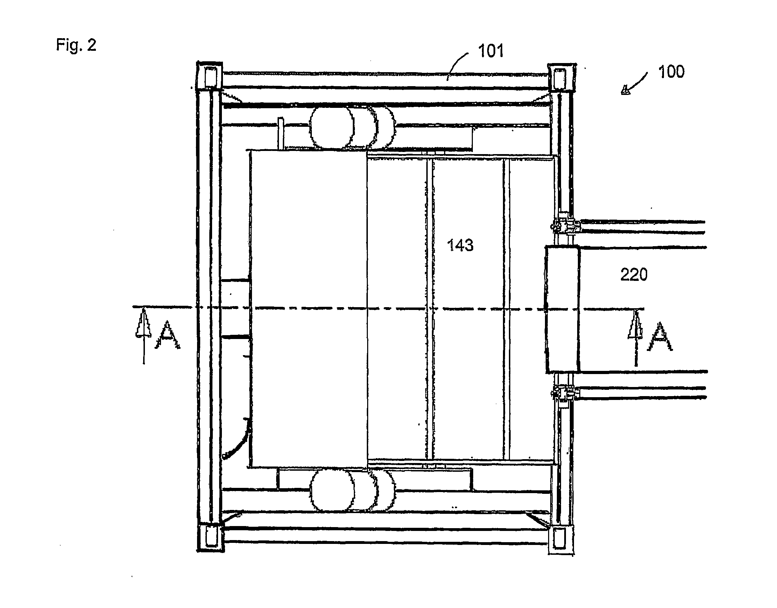

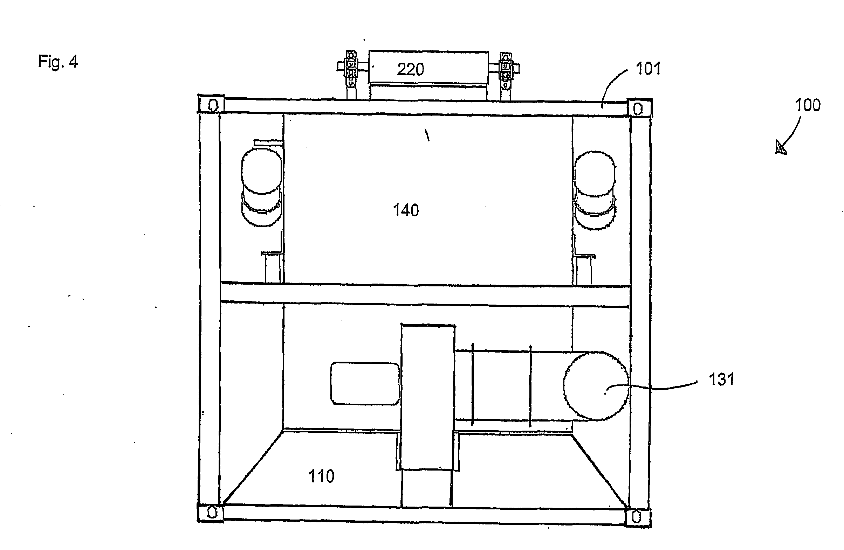

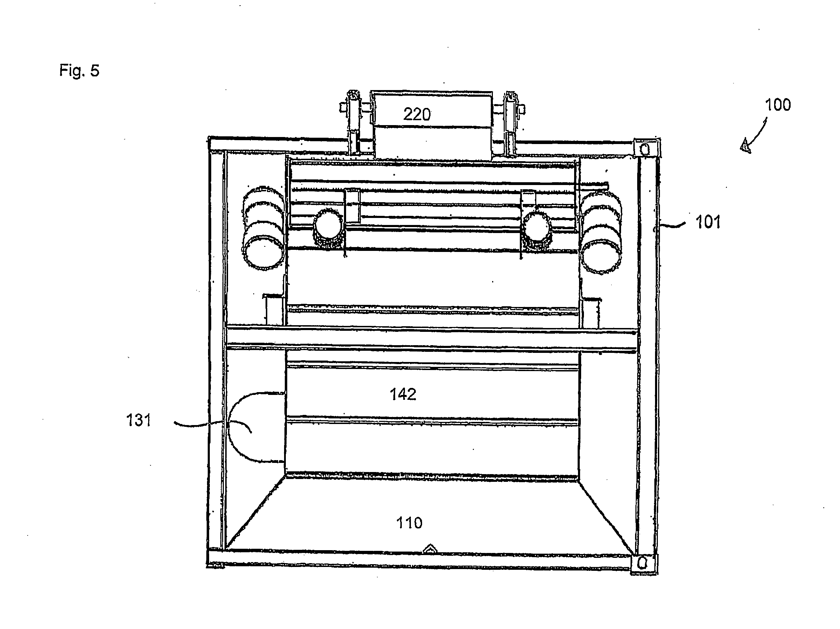

In den Figuren 1 bis 7 ist eine erste beispielhafte Ausführungsform einer Kühlungseinrichtung 100 zur Kühlung von Schüttgut, insbesondere von Zuschlägen zur Betonherstellung dargestellt. Diese Kühlungseinrichtung 100 kann einen Teil einer erfindungsgemäßen mobilen Vorrichtung zur Betonherstellung darstellen oder als erfindungsgemäßer Nachrüstbausatz zur Ergänzung einer bestehenden Zuschlagsverarbeitungsanlage, insbesondere einer Anlage zur Betonherstellung, eingesetzt werden. Die Kühlungseinrichtung 100 ist in einem Rahmen 101 angeordnet, der vorzugsweise einem 10" High-Cube-Container entspricht. Dies hat den Vorteil, dass sich zwei Kühlungseinrichtungen 100 zu einer 20"-Transporteinheit verbinden lassen, vorzugsweise über sogenannte Quick-Ties. Die Anordnung in einem Rahmen 101 hat weiterhin den Vorteil, dass die Kühlungseinrichtung 100 leicht zu transportieren und mit weiteren Modulen einer mobilen Vorrichtung zur Betonherstellung verbindbar ist.

Die Funktionsweise und die Komponenten der Kühlungseinrichtung 100 als Teil einer mobilen Betonanlage und als Nachrüstbausatz für mobile oder stationäre Betonanlagen sind für beide Anwendungsgebiete im Wesentlichen gleich und werden hier deshalb einheitlich erläutert. Gleiche oder im Wesentlichen gleiche Komponenten sind dabei in den Figuren mit gleichen Bezugszeichen versehen.

Die erfindungsgemäße Kühlungseinrichtung 100 umfasst einen Schüttgutspeicher 110, in dem Schüttgut zur Dosierung und weiteren Verarbeitung zu Beton bereit gehalten wird. Über ein Förderband 220, das nicht zur Kühlungseinrichtung 100 gehört, wird Schüttgut aus einem ebenfalls nicht zur Kühlungseinrichtung gehörenden Schüttgutvorratsbunker bzw. Materialspeicher 230 zur Kühlungseinrichtung 100 befördert. Das Förderband 220 ist vorzugsweise stufenlos regelbar.

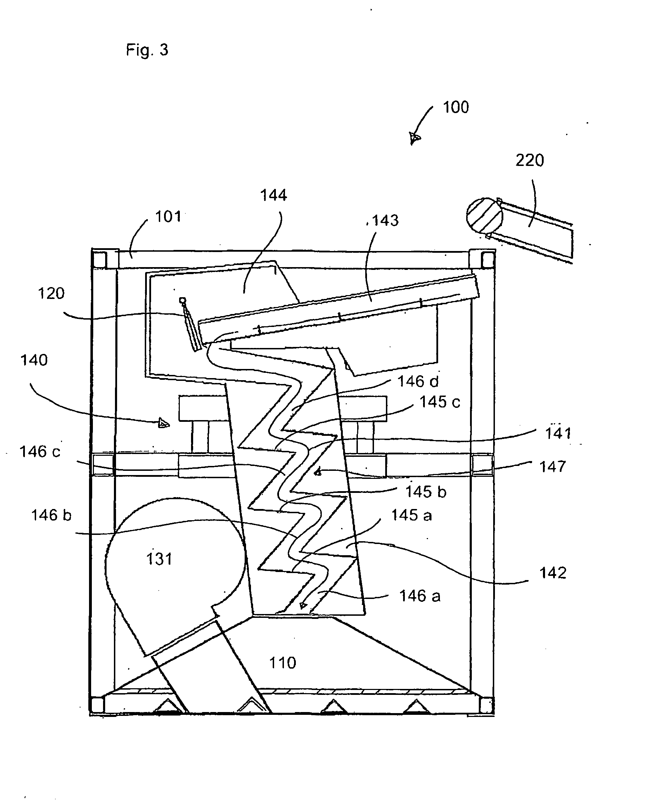

In der Kühlungseinrichtung 100 gelangt der Zuschlag zunächst in eine Schüttgutzufuhreinrichtung 140. Die Schüttgutzufuhreinrichtung 140 besteht in dem hier gezeigten Beispiel aus einer als Vibrationsföderer 143 ausgebildeten Schüttgutauflockerungsvorrichtung und einem Schüttgutzufuhrschacht 142. Das Schüttgut legt eine Schüttgutzufuhrstrecke 141 (wie in Fig. 3 mit Pfeil 141 kenntlich gemacht) über den Vibrationsföderer 143 und durch den Schüttgutzufuhrschacht 142 zurück, um in den Schüttgutspeicher 110 zu gelangen.

Entlang der Schüttgutzufuhrstrecke 141 ist eine Bewässerungseinrichtung 120 angeordnet. Diese Bewässerungseinrichtung 120 weist mehrere Wasserdüsen auf, die Wasser möglichst gleichmäßig auf das sich entlang der Schüttgutzufuhrstrecke 141 bewegende Schüttgut verteilen und das Schüttgut somit zuverlässig und gleichmäßig befeuchten. Vorzugsweise wird durch die Bewässerungseinrichtung 120 gekühltes Wasser auf das Schüttgut gesprüht.

Der Vibrationsföderer 143 lockert das Schüttgut auf, sodass sich in einer Volumeneinheit entlang der Schüttgutzufuhrstrecke weniger Schüttgutpartikel und mehr Luft befinden als in einer entsprechenden Volumeneinheit im mit Schüttgut gefüllten Schüttgutspeicher 110. Der Vibrationsföderer 143 bewirkt somit, dass dem Schüttgutspeicher 110 zuzuführendes Schüttgut entlang der Schüttgutzufuhrstrecke 141 eine geringere Dichte aufweist als im Schüttgutspeicher 110 gelagertes Schüttgut.

Das so aufgelockerte Schüttgut hat entlang der Schüttgutzufuhrstrecke 141 einen zumindest teilweise vertikalen Bewegungsanteil, insbesondere in dem schräg nach oben gerichteten Schüttgutzufuhrschacht 142. Insbesondere fällt das Schüttgut zunächst vom Vibrationsföderer 143 ausgehend zumindest über einen Teil der Schüttgutzufuhrstrecke 141 im Wesentlichen im freien Fall nach unten. Auf diese Weise wird das Schüttgut auf zumindest einen Teil der Schüttgutzufuhrstrecke 141 durch die Bewässerungseinrichtung 120 möglichst gleichmäßig und zuverlässig befeuchtet.

Anschließend gelangt das Schüttgut in einen im Schüttgutzufuhrschacht 142 angeordneten weiteren Vibrationsförderer 147. Dieser ist als Zick-Zack-Vibrationsförderer ausgebildet und weist mehrere, im Wesentlichen waagerecht angeordnete Böden 145 a, b, c auf, auf denen das Schüttgut durch Vibration gefördert wird. Dazwischen befinden sich mehrere Fallstrecken 146 a, b, c, d, auf denen das Schüttgut im Wesentlichen im freien Fall nach unten zum nächsten Boden 145 a, b, c bzw. in den Schüttgutspeicher 110 fällt. Die über ein Gebläse 131 zugeführte Luft durchströmt den im Schüttgutzufuhrschacht 142 angeordneten weiteren Vibrationsförderer 147 in einer dem Pfeil 141 (s. Fig. 3) entgegengesetzten Richtung. Diese Ausbildung mit einem Zick-Zack-Vibrationsförderer ist besonders bevorzugt, da hier das befeuchtete Schüttgut in vorteilhafter Weise entlang der Schüttgutzufuhrstrecke 141 mehrmals in einem im Wesentlichen freien Fall gefördert wird und dadurch besonders gut von der zugeführten Luft durchströmt und damit besonders effektiv und effizient gekühlt werden kann.

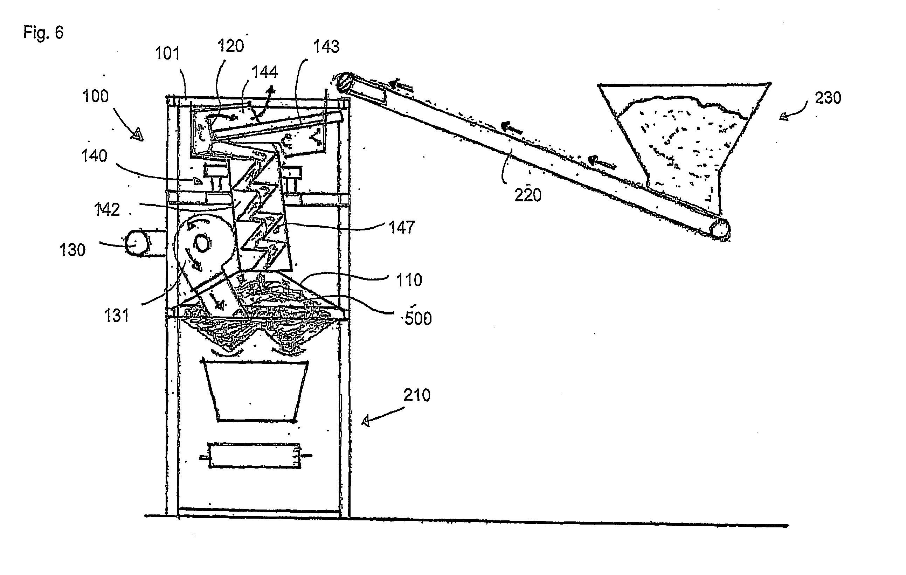

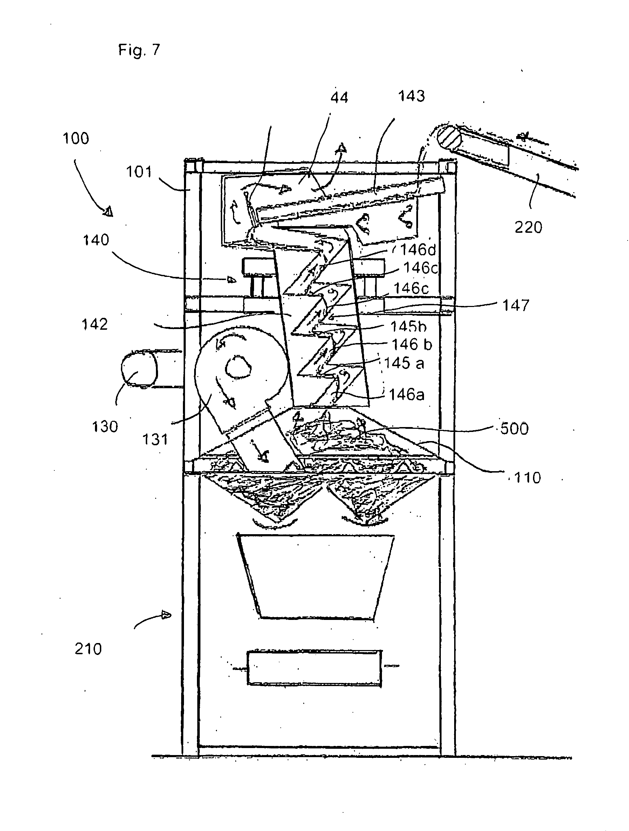

Wie insbesondere in den Figuren 6 und 7 erkennbar ist, ist die Kühlungseinrichtung 100 vorzugsweise als Teil einer mobilen Vorrichtung zur Betonherstellung auf einem Dosierunterbau 210 angeordnet, mit dem das gekühlte Schüttgut 500 abgewogen, dosiert und zur Weiterverarbeitung zum Einsatzort transportiert werden kann.

Durch eine Luftzufuhreinrichtung 130 wird vorzugsweise getrocknete und gekühlte Luft der Kühlungseinrichtung 100 zugeführt und über ein Gebläse 131 von unten in den Schüttgutspeicher 110 eingespeist. Von dort durchdringt die zugeführte Luft das im Schüttgutspeicher 110 befindliche und bereits möglichst homogen befeuchtete Schüttgut 500, gelangt durch den Schüttgutzufuhrschacht 142 als erwärmte und mit Wasser angereicherte Abluft in einen Bereich 144 mit erweitertem Querschnitt und tritt durch vorzugsweise eine Luftabfuhreinrichtung (nicht dargestellt) aus der Kühlungseinrichtung 100 aus.

Der Weg der Luft durch die Kühlungseinrichtung 100 ist in den Figuren 6 und 7 durch Pfeile in der Kühlungseinrichtung 100 dargestellt. Wie zu erkennen ist, verlaufen diese Pfeile in entgegengesetzter Richtung zu Pfeil 141 in Fig. 3. Die kalte Luft wird vom Gebläse 131 angesaugt und in den Schüttgutspeicher 110 eingeblasen. Da der Schüttgutspeicher 110 bis auf den Ausgang durch den Schüttgutzufuhrschacht 142 luftdicht geschlossen ist, kann die Luft nur durch den im Schüttgutzufuhrschacht 142 angeordneten Zick-Zack-Vibrationsförderer 147 aus dem Schüttgutspeicher 110 wieder austreten und muss auf diese Weise das im Schüttgutspeicher 110 befindliche und das durch den Schüttgutzufuhrschacht 142 hineinkommende Schüttgut 500 durch- bzw. die Schüttgutpartikel umströmen. Durch die bevorzugte Anordnung des Zick-Zack-Vibrationsförderers 147 im Schüttgutzufuhrschacht 142 und die damit verbundenen gegenläufigen Strömungs- bzw. Bewegungsrichtungen von Luft und Schüttgut 500 wird eine besonders gute Umströmung der Schüttgutpartikel und damit eine besonders effiziente und effektive Kühlung erreicht.

Nachdem die Luft den Schüttgutzufuhrschacht 142 von unten nach oben durchströmt hat, gelangt die Luft, die mittlerweile Wärme und Feuchtigkeit von den Schüttgutpartikel aufgenommen hat, in einen Luftaustritt 144, wo sich die Strömungsgeschwindigkeit der Luft verringert. Dadurch fallen Schwebe- und Staubpartikel, die möglicherweise in der Luft lose mittransportiert wurden, wieder auf den Vibrationsförderer zurück, so dass die austretende Abluft relativ sauber ist. Dies hat den Vorteil, dass beim Trocknen und/oder Entfeuchten der Abluft und bei der Weiterverwendung des dabei anfallenden Wassers auf aufwendige Filtermaßnahmen verzichtet werden kann.

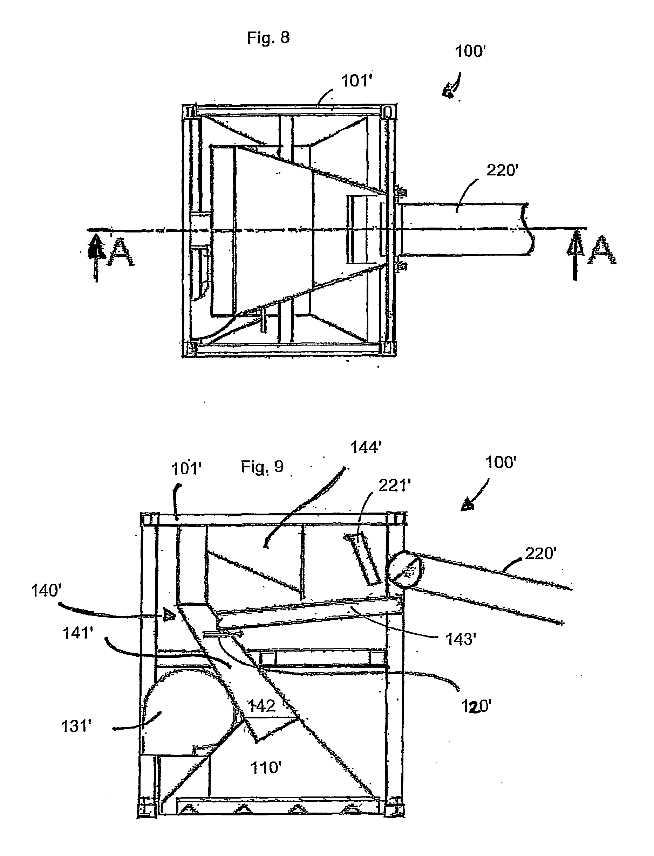

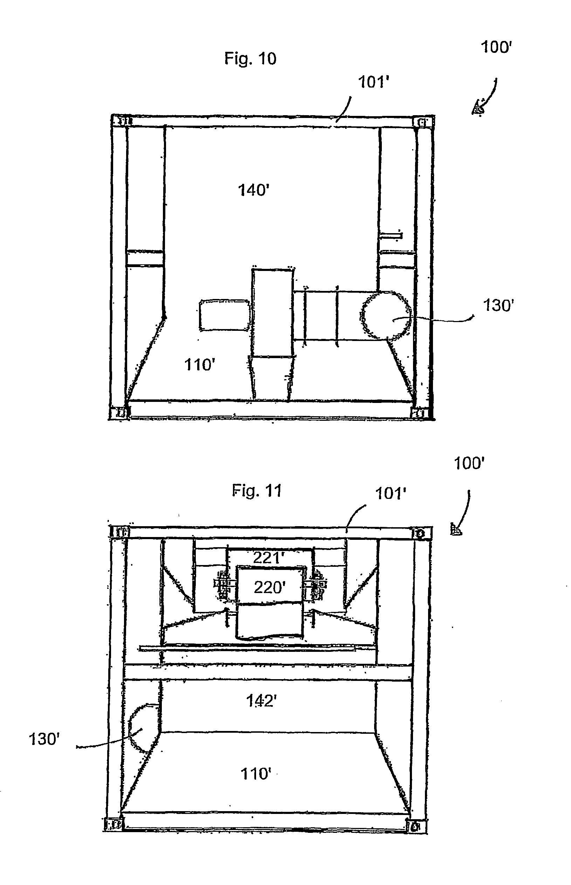

In den Figuren 8 bis 13 ist eine zweite beispielhafte Ausführungsform einer Kühlungseinrichtung 100' für eine mobile Vorrichtung zur Betonherstellung zur Kühlung von Schüttgut, insbesondere von Zuschlägen zur Betonherstellung dargestellt. Die zweite beispielhafte Ausführungsform der Kühlungseinrichtung 100' entspricht in vielen Aspekten der ersten beispielshaften Ausführungsform der Kühlungseinrichtung 100 gemäß den Figuren 1-7. Auch eine Kombination oder ein Austausch von Merkmalen der ersten und der zweiten Ausführungsform ist bevorzugt.

Gleiche oder im Wesentlichen gleiche Aspekte der beiden dargestellten Ausführungsformen daher mit den gleichen Bezugszeichen wie in der ersten Ausführungsform, denen in der zweiten Ausführungsform ein Strich nachgestellt ist, bezeichnet. Im Folgenden wird insbesondere auf unterschiedlich ausgebildete Aspekte Bezug genommen.

In der Kühlungseinrichtung 100' gelangt der Zuschlag zunächst in eine Schüttgutzufuhreinrichtung 140'. Die Schüttgutzufuhreinrichtung 140' besteht in dem hier gezeigten Beispiel aus einer als Vibrationsföderer 143' ausgebildeten Schüttgutauflockerungsvorrichtung und einem Schüttgutzufuhrschacht 142'. Ein Fallblech 212' verhindert, dass über das Förderband 220' in die Schüttgutzufuhreinrichtung 140' gelangendes Schüttgut zu weit auf den Vibrationsföderer 143' fliegt. Das Schüttgut legt eine Schüttgutzufuhrstrecke 141' über den Vibrationsföderer 143' und durch den Schüttgutzufuhrschacht 142' zurück, um in den Schüttgutspeicher 110' zu gelangen.

Entlang der Schüttgutzufuhrstrecke 141' ist eine Bewässerungseinrichtung 120' angeordnet. Diese Bewässerungseinrichtung 120' weist mehrere Wasserdüsen auf, die Wasser möglichst gleichmäßig auf das sich entlang der Schüttgutzufuhrstrecke 141' bewegende Schüttgut verteilen und das Schüttgut somit zuverlässig und gleichmäßig befeuchten. Vorzugsweise wird durch die Bewässerungseinrichtung 120' gekühltes Wasser auf das Schüttgut gesprüht.

Der Vibrationsföderer 143' lockert das Schüttgut auf, sodass sich in einer Volumeneinheit entlang der Schüttgutzufuhrstrecke weniger Schüttgutpartikel und mehr Luft befinden als in einer entsprechenden Volumeneinheit im mit Schüttgut gefüllten Schüttgutspeicher 110'. Der Vibrationsföderer 143' bewirkt somit, dass dem Schüttgutspeicher 110' zuzuführendes Schüttgut entlang der Schüttgutzufuhrstrecke 141' eine geringere Dichte aufweist als im Schüttgutspeicher 110' gelagertes Schüttgut.

Das so aufgelockerte Schüttgut hat entlang der Schüttgutzufuhrstrecke 141' einen zumindest teilweise vertikalen Bewegungsanteil, insbesondere in dem schräg nach oben gerichteten Schüttgutzufuhrschacht 142'. Insbesondere fällt das Schüttgut vom Vibrationsföderer 143' ausgehend zumindest über einen Teil der Schüttgutzufuhrstrecke 141' im Wesentlichen im freien Fall nach unten. Auf diese Weise wird das Schüttgut auf zumindest einen Teil der Schüttgutzufuhrstrecke 141' durch die Bewässerungseinrichtung 120' möglichst gleichmäßig und zuverlässig befeuchtet.

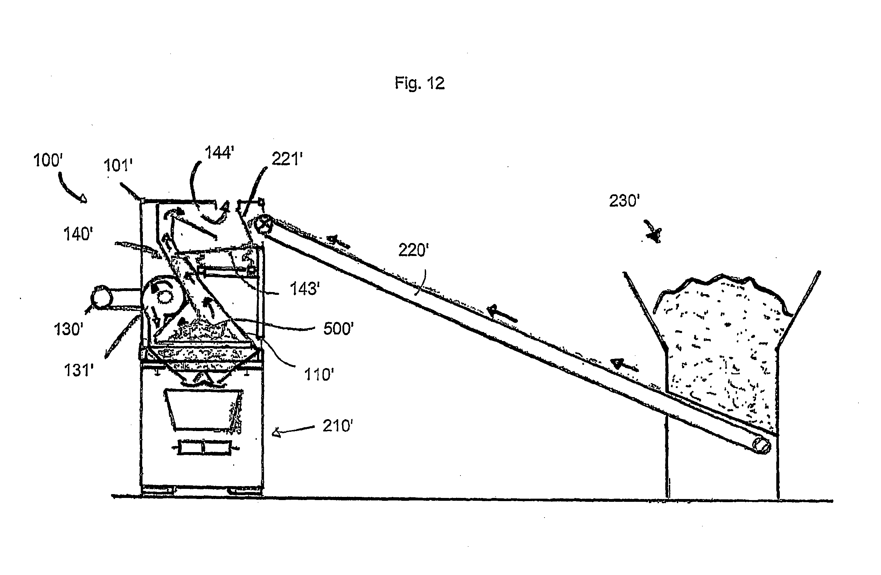

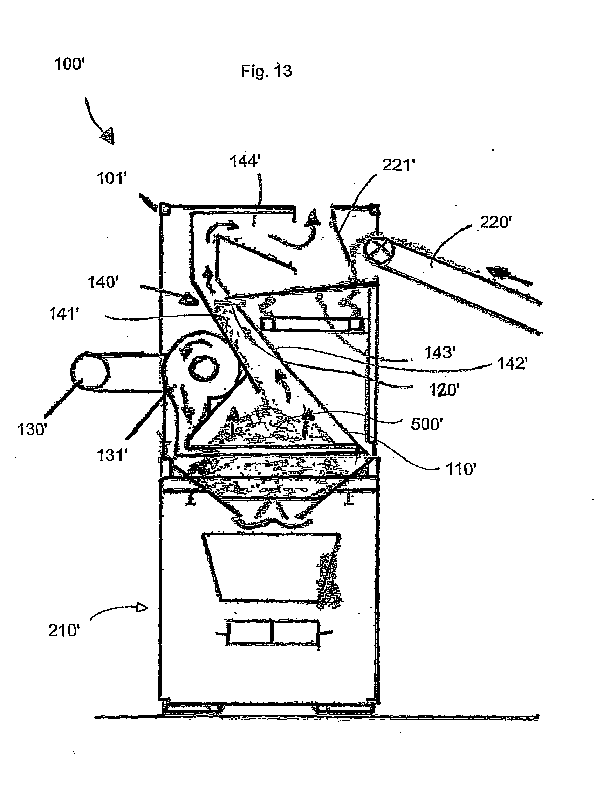

Wie insbesondere in den Figuren 12 und 13 erkennbar ist, ist die Kühlungseinrichtung 100' vorzugsweise als Teil einer mobilen Vorrichtung zur Betonherstellung auf einem Dosierunterbau 210' angeordnet, mit dem das gekühlte Schüttgut abgewogen, dosiert und zur Weiterverarbeitung zum Einsatzort transportiert werden kann.

Durch eine Luftzufuhreinrichtung 130' wird vorzugsweise getrocknete und gekühlte Luft der Kühlungseinrichtung 100' zugeführt und über ein Gebläse 131' von unten in den Schüttgutspeicher 110' eingespeist. Von dort durchdringt die zugeführte Luft das im Schüttgutspeicher 110' befindliche und bereits möglichst homogen befeuchtete Schüttgut, gelangt durch den Schüttgutzufuhrschacht 142' als erwärmte und mit Wasser angereicherte Abluft in einen Bereich 144' mit erweitertem Querschnitt und tritt durch vorzugsweise eine Luftabfuhreinrichtung (nicht dargestellt) aus der Kühlungseinrichtung 100' aus.

Der Weg der Luft durch die Kühlungseinrichtung 100' ist in den Figuren 12 und 13 durch Pfeile in der Kühlungseinrichtung 100' dargestellt. Die kalte Luft wird vom Gebläse 131' angesaugt und in den Schüttgutspeicher 110' eingeblasen. Da der Schüttgutspeicher 110' bis auf den Ausgang durch den Schüttgutzufuhrschacht 142' luftdicht geschlossen ist, kann die Luft nur durch den Schüttgutzufuhrschacht 142' aus dem Schüttgutspeicher 110' wieder austreten und muss auf diese Weise das im Schüttgutspeicher 110' befindliche und das durch den Schüttgutzufuhrschacht 142' hineinkommende Schüttgut 500' durch- bzw. die Schüttgutpartikel umströmen. Nachdem die Luft den Schüttgutzufuhrschacht 142' von unten nach oben durchströmt hat, gelangt die Luft, die mittlerweile Wärme und Feuchtigkeit von den Schüttgutpartikel aufgenommen hat, in eine größere Kammer 144', wo sich die Strömungsgeschwindigkeit der Luft aufgrund des größeren Querschnitts der Kammer 144' verringert. Dadurch fallen Schwebe- und Staubpartikel, die möglicherweise in der Luft lose mittransportiert wurden, wieder auf den Vibrationsförderer zurück, so dass die austretende Abluft relativ sauber ist. Dies hat den Vorteil, dass beim Trocknen und/oder Entfeuchten der Abluft und bei der Weiterverwendung des dabei anfallenden Wassers auf aufwendige Filtermaßnahmen verzichtet werden kann.

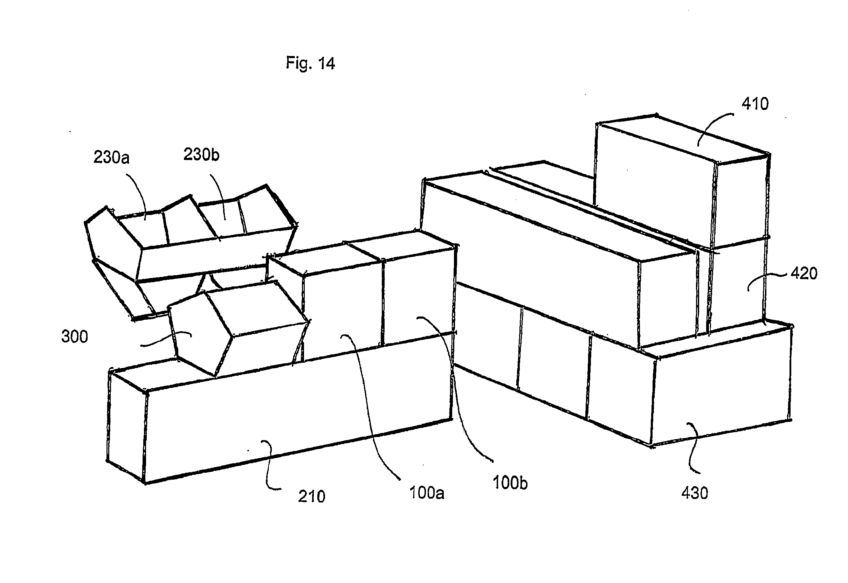

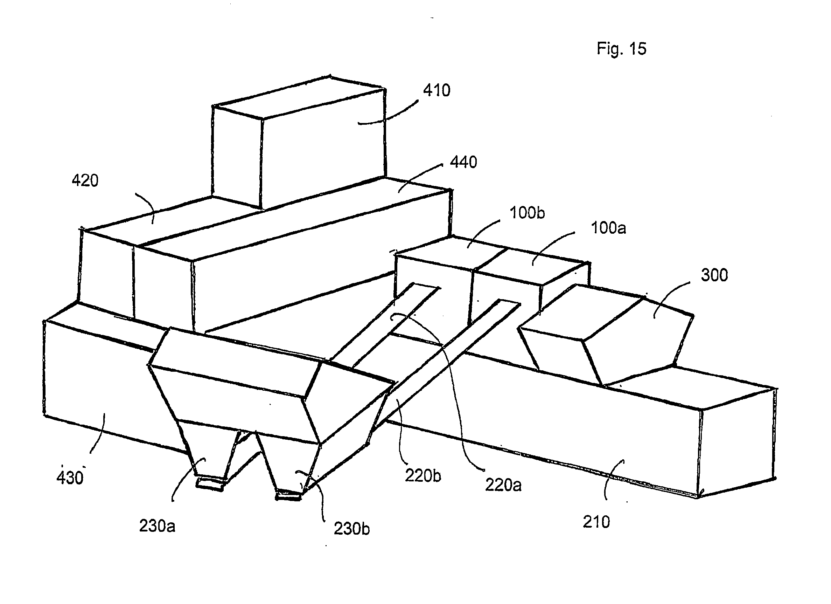

Die Figuren 14 und 15 zeigen zwei dreidimensionale Ansichten aus unterschiedlichen Perspektiven eines Teils einer erfindungsgemäßen mobilen Vorrichtung zur Betonherstellung. Über einem Dosierunterteil 210, in dem gekühlte Zuschläge gewogen, dosiert und für die Weiterverarbeitung zur Verfügung gestellt werden, sind zwei erfindungsgemäße Kühlungseinrichtungen 100a, 100b zur Kühlung von Schüttgut angeordnet. Zu diesen Kühlungseinrichtungen 100a, 100b wird über die Förderbänder 220a, 220b zu kühlendes Schüttgut, insbesondere Sand und feiner Kies aus den Materialspeichern 230a, 230b zugeführt. Ebenfalls auf dem Dosierunterteil 210 angeordnet ist ein weiterer Zuschlagkühler 300, der für Zuschlag mit großer Korngröße, beispielsweise groben Kies, geeignet ist und auch als Zuschlagkühler nach einer der aus dem Stand der Technik bekannten Varianten ausgebildet sein kann.

In den Figuren 14 und 15 sind weiterhin ein Vorkühler 410 und ein Chiller 420 für die Wasserkühlung als Elemente eines Kühlkreislaufs der erfindungsgemäßen mobilen Betonanlage gezeigt. Das gekühlte Wasser wird im Kaltwassertank 430 gespeichert.

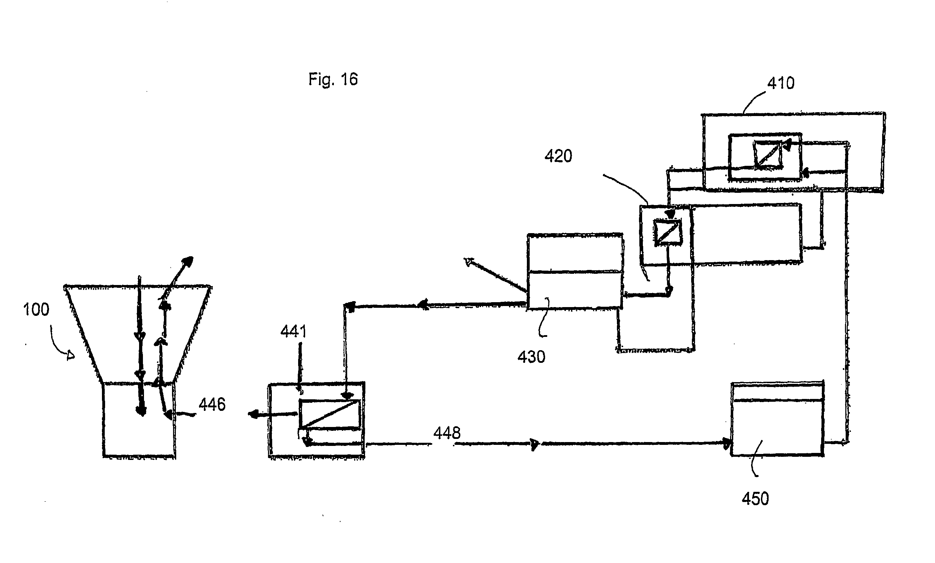

Weiterhin ist auch eine Luftkühlvorrichtung 440 vorhanden. Die Zusammenhänge dieser Komponenten und ihre Funktionsweisen sind näher in den Figuren 16 bis 19 dargestellt.

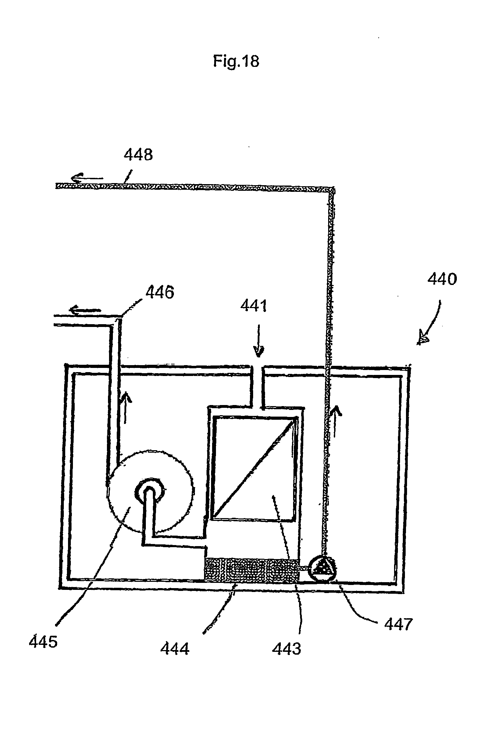

In den Figuren 16 und 18 ist schematisch eine Variante eines Kühlkreislaufs einer erfindungsgemäßen mobilen Betonanlage gezeigt, in der die Abluft aus der Kühlungseinrichtung 100 aus der Anlage entweicht und Umgebungsluft über die Leitung 441 in die Luftkühlvorrichtung 440 zugeführt wird. Bei dieser Variante ist der Wasserverbrauch höher, der Energieverbrauch jedoch niedriger, da die Luft nicht entfeuchtet werden muss, und daher auch weniger Energie zur Kühlung der Luft erforderlich ist, da beim Entfeuchten der Luft die Luft erwärmt wird.

Die im Folgenden beispielhaft genannten Temperatur- und Luftfeuchtigkeitsangaben beziehen sich auf eine Region mit heißem Klima, wo in der Umgebung gelagerte Zuschläge eine Temperatur von ca. 40-50°C haben und die Luft eine Temperatur von ca. 30-45°C mit einer relativen Feuchte von ca. 50-70% aufweist.

In der in den Figuren 16 und 18 gezeigten Variante ohne Wasserrückgewinnung ist eine erfindungsgemäße Kühlungseinrichtung 100 zur Kühlung von Schüttgut dargestellt, bei der in einen Schüttgutzuschlagtrichter Zuschlag mit einer Temperatur von ca. 40-50°C eingeführt und auf ca. 15-25°C gekühlt wird.

Aus der Luftkühlvorrichtung 440 gelangt auf ca. 10-20°C gekühlte Luft über die Leitung 446 in die Kühlungseinrichtung 100. Die aus der Kühlungseinrichtung 100 austretende Abluft hat eine Temperatur von ca. 40-50°C mit einer relativen Feuchte von bis zu 100%.

Bei der Luftkühlung fällt Kondenswasser an, das über die Leitung 448 mit einer Temperatur von ca. 25 bis 40°C in einen Wassertank 450 geführt wird, in den auch Frischwasser zugeführt werden kann.

Die Wassertemperatur im Frischwassertank liegt bei ca. 35-45°C. Aus diesem Frischwassertank wird der Vorkühler 410 gespeist mit einer Wassertemperatur von ca. 35-45°C. Der Vorkühler 410 kühlt das Wasser auf eine Temperatur von ca. 30-40°C herunter und speist damit den Chiller 420. Der Chiller kühlt das Wasser weiter auf ca. 5-15°C herunter und speist damit den Kaltwassertank, in dem das Wasser eine Temperatur von ca. 4 bis 15°C hat. Über die gestrichelt dargestellten Pfeile kann das Kaltwasser aus dem Kaltwassertank dem Chiller in einem Subcooling-Kreislauf wieder zugeführt werden.

Aus dem Kaltwassertank 430 wird zum einen der Wärmetauscher 443 in der Luftkühlvorrichtung 440 gespeist und zum anderen erfolgt ein Zulauf zur Betonmischanlage aus dem Kaltwassertank, so dass auch direkt gekühltes Wasser zur Betonmischung verwendet wird. Das aus dem Kaltwassertank bereitgestellte Wasser hat dabei eine Temperatur von ca. 5-15°C.

In die Luftkühlvorrichtung 440 wird Außenluft 441 zugeführt. In der Luftkühlvorrichtung 440 sind neben dem Luftwärmetauscher 443 ein Kondenswasserbehälter 444 angeordnet, aus dem das Kondenswasser über eine Wasserpumpe 447 und die Leitung 448 abgepumpt oder wiederverwendet werden kann. Die im Luftwärmetauscher 443 gekühlte Luft wird über ein Gebläse 445 und die Leitung 446 der Kühlungseinrichtung 100 zugeführt.

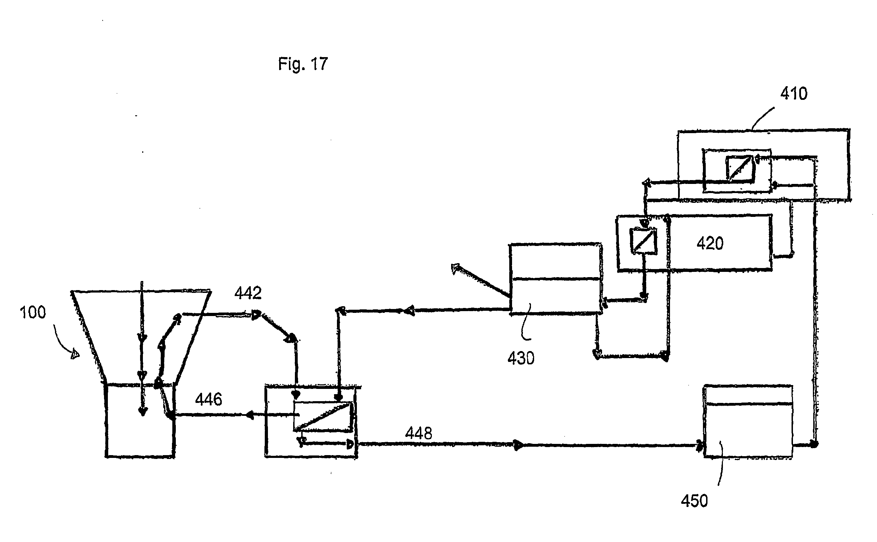

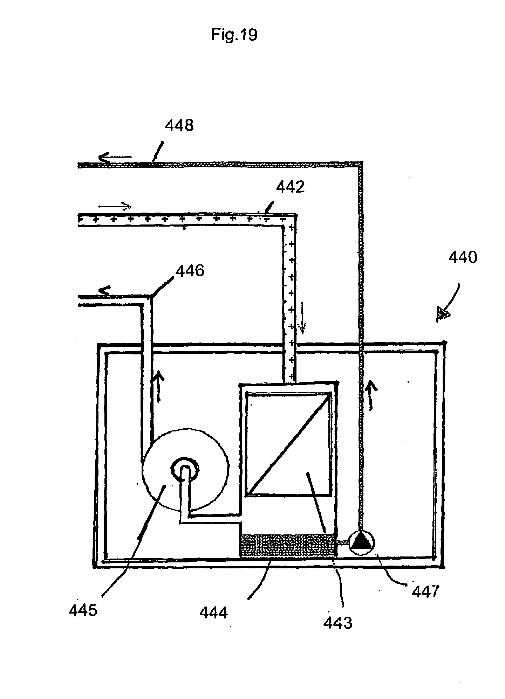

In der in den Figuren 17 und 19 schematisch dargestellten Variante eines Kühlkreislaufs einer erfindungsgemäßen mobilen Betonanlage wird die Abluft aus der Kühlungseinrichtung 100 über eine Leitung 442 der Luftkühlvorrichtung 440 zugeführt. Bei dieser Variante ist der Wasserverbrauch geringer, da das in der Abluft als Wasserdampf enthaltene Wasser in der Luftkühlvorrichtung 440 auskondensiert und über die Leitung 448 dem Wasserkreislauf wieder zugeführt wird. Allerdings erwärmt sich die Luft beim Trocknen, so dass die Energie zur Kühlung der Luft in der Luftkühlvorrichtung 440 höher ist.

Die im Folgenden beispielhaft genannten Temperatur- und Luftfeuchtigkeitsangaben beziehen sich auf eine Region mit heißem Klima, wo in der Umgebung gelagerte Zuschläge eine Temperatur von ca. 40-50°C haben und die Luft eine Temperatur von ca. 30-45°C mit einer relativen Feuchte von ca. 50-70% aufweist.

In der in den Figuren 17 und 19 gezeigten Variante mit Wasserrückgewinnung ist eine erfindungsgemäße Kühlungseinrichtung 100 zur Kühlung von Schüttgut dargestellt, bei der in einen Schüttgutzuschlagtrichter Zuschlag mit einer Temperatur von ca. 40-50°C eingeführt und auf ca. unter 20°C gekühlt wird.

Aus der Luftkühlvorrichtung 440 gelangt auf ca. 10-20°C gekühlte Luft über die Leitung 446 in die Kühlungseinrichtung 100. Die aus der Kühlungseinrichtung 100 austretende Abluft hat eine Temperatur von ca. 40-50°C mit einer relativen Feuchte von bis zu 100%.

Bei der Luftkühlung fällt Kondenswasser an, bei Abluftrückführung mehr als bei der Verwendung von Umgebungsluft, da der Feuchtegehalt der Abluft höher ist als der der Umgebungsluft. Das anfallende Kondenswasser wird über die Leitung 448 mit einer Temperatur von ca. 30-40°C in einen Wassertank 450 geführt, in den auch Frischwasser zugeführt werden kann.

Die Wassertemperatur im Frischwassertank liegt bei ca. 35-45°C. Aus diesem Frischwassertank wird der Vorkühler 110 gespeist mit einer Wassertemperatur von ca. 35-45°C. Der Vorkühler 410 kühlt das Wasser auf eine Temperatur von ca. 30-40°C herunter und speist damit den Chiller 420. Der Chiller kühlt das Wasser weiter auf ca. 5-15°C herunter und speist damit den Kaltwassertank, in dem das Wasser eine Temperatur von ca. 4 bis 15°C hat. Über die gestrichelt dargestellten Pfeile kann das Kaltwasser aus dem Kaltwassertank dem Chiller in einem Subcooling-Kreislauf wieder zugeführt werden.

Aus dem Kaltwassertank 430 wird zum einen der Wärmetauscher 443 in der Luftkühlvorrichtung 440 gespeist und zum anderen erfolgt ein Zulauf zur Betonmischanlage aus dem Kaltwassertank, so dass auch direkt gekühltes Wasser zur Betonmischung verwendet wird. Das aus dem Kaltwassertank bereitgestellte Wasser hat dabei eine Temperatur von ca. unter 10°C.

In die Luftkühlvorrichtung 440 wird die warme Abluft über die Leitung 442 zugeführt. In der Luftkühlvorrichtung 440 sind neben dem Luftwärmetauscher 443 ein Kondenswasserbehälter 444 angeordnet, aus dem das Kondenswasser über eine Wasserpumpe 447 und die Leitung 448 dem Wasserkreislauf wieder zugeführt werden kann. Bei der in den Figuren 17 und 19 gezeigten Variante mit Wasserrückgewinnung fällt aufgrund der höheren Luftfeuchte mehr Kondenswasser an als bei der in den Figuren 16 und 18 gezeigten Variante. Die im Luftwärmetauscher 443 gekühlte Luft wird über ein Gebläse 445 und die Leitung 446 der Kühlungseinrichtung 100 wieder zugeführt.

## Patentansprüche

1. Mobile Vorrichtung zur Betonherstellung mit einer Kühlungseinrichtung zur Verdunstungskühlung von Schüttgut, nämlich von Zuschlägen zur Betonherstellung die Kühlungseinrichtung (100) umfassend einen Schüttgutspeicher (110), eine Bewässerungseinrichtung (120) und eine Luftzufuhreinrichtung (130),
- wobei die Kühlungseinrichtung (100) in einem Rahmen angeordnet ist, der einem genormten Container entspricht, und
- die Kühlungseinrichtung (100) eine Schüttgutzufuhreinrichtung (140) zur Zufuhr von Schüttgut in den Schüttgutspeicher (110) über eine Schüttgutzufuhrstrecke (141) aufweist, mit einem Schüttgutzufuhrschacht (142), der sich vom Schüttgutspeicher (110) aus nach oben erstreckt, und in dem ein Zick-Zack-Vibrationsförderer (143) angeordnet ist, wobei zuzuführendes Schüttgut auf mehreren Teilen der Schüttgutzufuhrstrecke (141) auf einer Bewegungsbahn geführt wird, die einem im Wesentlichen freien Fall des Schüttguts entspricht,
- wobei die Schüttgutzufunreinrichtung (140) und die Bewässerungseinrichtung (120) derart ausgebildet und angeordnet sind, dass zuzuführendes Schüttgut zumindest auf einem. Teil der Schüttgutzufuhrstrecke (141) mit aus der Bewässerungseinrichtung (120) austretendem Wasser in Berührung kommt und auf diesem Teil der Schüttgutzufuhrstrecke (141) auf einer Bewegungsbahn geführt wird, die einem im Wesentlichen frelen Fall des Schüttguts entspricht, und
- der Schüttgutspeicher (110) bis auf den Ausgang durch den Schüttgutzufuhrschacht (142) luftdicht geschlossen ist, so dass von der Luftzufuhreinrichtung (130) in den Schüttgutspeicher (110) eingeblasene Luft nur durch den im Schüttgutzufuhrschacht (142) angeordneten Zick-Zack-Vibrationsförderer (143) in einer der Schüttgut zufuhrstrecke (141) entgegengesetzten Richtung aus dem Schüttgutspeicher (110) wieder austreten kann.

2. Vorrichtung nach dem vorhergehenden Anspruch,
**gekennzeichnet durch** eine Luftkühlvorrichtung (440) zur Kühlung der mittels der Luftzufuhreinrichtung (130) zuzuführenden Luft.

3. Vorrichtung nach dem vorhergehenden Anspruch,
**dadurch gekennzeichnet, dass** die Luftkühlvorrichtung (440) eine Lufttrocknungsvorrichtung zur Trocknung der mittels der Luftzufuhreinrichtung (440) zuzuführenden Luft umfasst.

4. Vorrichtung nach einem der vorhergehenden Ansprüche,
**gekennzeichnet durch** eine Luftabfuhreinrichtung.

5. Vorrichtung nach dem vorhergehenden Anspruch,
**dadurch gekennzeichnet, dass** die Bewässerungseinrichtung (120), die Luftabfuhreinrichtung und die Luftkühlvorrichtung (440) derart angeordnet und ausgebildet sind, dass ein Luftauslass der Luftabfuhreinrichtung mit einem Lufteinlass der Luftkühlvorrichtung (440) verbunden und ein Wasserauslass der Luftkühlvorrichtung (440) mit einem Wassereinlass der Bewässerungseinrichtung (120) verbunden ist

6. Vorrichtung nach einem der beiden vorhergehenden Ansprüche,
**dadurch gekennzeichnet, dass** die Luftzufuhreinrichtung (130), die Luftabfuhreinrichtung und die Luftkühlvorrichtung (440) derart angeordnet und ausgebildet sind, dass ein Luftauslass der Luftabfuhreinrichtung mit einem Lufteinlass der Luftkühlvorrichtung (440) verbunden und ein Luftauslass der Luftkühlvorrichtung (440) mit einem Lufteinlass der Luftzufuhreinrichtung (130) verbunden ist.

7. Vorrichtung nach einem der vorhergehenden Ansprüche,
**gekennzeichnet durch** eine Wasserkühlvorrichtung (410, 420) zur Kühlung des mittels der Bewässerungseinrichtung (120) zuzuführenden Wassers.

8. Vorrichtung nach dem vorhergehenden Anspruch,
**dadurch gekennzeichnet, dass** die Luftkühlvorrichtung (440) und die Bewässerungseinrichtung (120) derart angeordnet und ausgebildet sind, dass ein Wasserauslass der Luftkühlvorrichtung (440) mit einem Wassereinlass der Bewässerungseinrichtung (120) verbunden ist, wobei vorzugsweise der Wasserauslass der Luftkühlvorrichtung (440) über eine Wasserkühlvorrichtung (410, 420) mit dem Wassereinlass der Bewässerungseinrichtung (120) verbunden ist.

9. Vorrichtung nach einem der vorhergehenden Ansprüche,
**gekennzeichnet durch** einen Wasserkühlkreislauf, in dem die folgenden Komponenten in Reihe angeordnet sind:
- ein Frischwassertank (450),
- vorzugsweise ein Vorkühler (410),
- ein Chiller (420),
- ein Kaltwassertank (430) und
- eine Luftkühlvorrichtung (440),
wobei der Wasserkühlkreislauf und seine Komponenten derart ausgebildet und angeordnet sind, dass ein Wassereinlass der Luftkühlvorrichtung (440) mit einem Wasserauslass des Kaltwassertanks (430) verbunden ist und/oder ein Wasserauslass der Luftkühlvorrichtung (440) mit einem Wassereinlass des Frischwassertanks (450) verbunden ist und/oder ein Wasserauslass des Kaltwassertanks (430) mit einem Wassereinlass der Bewässerungseinrichtung (130) verbunden ist.

10. Verfahren zur Betonherstellung bei dem Schüttgut, nämlich Zuschläge zur Betonherstellung, durch Verdunstung gekühlt werden, wobei die Kühlung die Schritte umfasst:
- Speichern von Schüttgut in einem Schüttgutspeicher (110),
- Bewässern von Schüttgut mit Wasser,
- Zuführen von Schüttgut über eine Schüttgutzufuhrstrecke (141) in einem Schüttgutzufuhrschacht (142), der sich vom Schüttgutspeicher (110) aus nach oben erstreckt, und in dem ein Zick-Zack-Vibrationsförderer (143) angeordnet ist, wobei zuzuführendes Schüttgut auf mehreren Teilen der Schüttgutzufuhrstrecke (141) auf einer Bewegungsbahn geführt wird, die einem im Wesentlichen freien Fall des Schüttguts entspricht, und
- Zuführen von Luft in den Schüttgutspeicher (110)
- wobei der Schritt des Bewässerns auf zumindest einem Teil der Schüttgutzufuhrstrecke (141) erfolgt und das Schüttgut auf diesem Teil der Schüttgutzufuhrstrecke (141) auf einer Bewegungsbahn geführt wird, die einem im Wesentlichen freien Fall des Schüttguts entspricht, und
- der Schüttgutspeicher (110) bis auf den Ausgang durch den Schüttgutzufuhrschacht (142) luftdicht geschlossen ist, so dass die Luft nur durch den im Schüttgutzufuhrschacht (142) angeordneten Zick-Zack-Vibrationsförderer (143) in einer der Schüttgutzufuhrstrecke (141) entgegengesetzten Richtung aus dem Schüttgutspeicher (110) wieder austreten kann.

11. Verfahren nach dem vorhergehenden Anspruch,
**gekennzeichnet durch** den Schritt:
- Kühlen der abgeführten Luft, vorzugsweise ferner **dadurch** gekennzeichnet, dass das Kühlen der abgeführten Luft auch das Trocknen der abgeführten Luft umfasst.

12. Verfahren nach dem vorhergehenden Anspruch,
**gekennzeichnet durch** den Schritt:
- Verwenden der gekühlten abgeführten Luft für das Zuführen von Luft.

13. Verfahren nach einem der beiden vorhergehenden Ansprüche,
**gekennzeichnet durch** den Schritt:
- Verwenden von beim Kühlen der abgeführten Luft anfallendem Wasser für die Bewässerung von Schüttgut.

14. Verfahren nach dem vorhergehenden Anspruch,
**dadurch gekennzeichnet, dass** das beim Kühlen der abgeführten Luft anfallende Wasser vor und/oder bei der Verwendung für die Bewässerung von Schüttgut gekühlt wird.

15. Nachrüstbausatz zur Ergänzung einer bestehenden Zuschlagverarbeitungsanlage, insbesondere einer Anlage zur Betonherstellung mit einer Vorrichtung zur Kühlung von Schüttgut, insbesondere von Zuschlägen zur Betonherstellung,
**dadurch gekennzeichnet, dass** der Nachrüstbausatz Nachrüstkomponenten aufweist, die den Merkmalen der Einrichtung zur Kühlung von Schüttgut nach Anspruch 1 entsprechen, wobei
der Nachrüstbausatz ferner vorzugsweise die Merkmale nach einem der Ansprüche 2 bis 9 aufweist.

## Claims

1. Mobile device for producing concrete incorporating a cooling apparatus for evaporative cooling of bulk material, namely aggregates for producing concrete, which cooling apparatus (100) comprises a bulk material container (110), a wetting apparatus (120) and an air supply apparatus (130),
- in which the cooling apparatus (100) is disposed in a frame which corresponds to a standard container, and
- the cooling apparatus (100) has a bulk material feeder (140) for feeding bulk material into the bulk material container (110) across a bulk material feed run (141), with a bulk material chute (142) extending upwards from the bulk material container (110) and in which a zigzag vibrating conveyor (143) is disposed, and bulk material to be fed is guided on a path of movement corresponding to an essentially free falling movement of the bulk material on several parts of the bulk material feed run (141),
- and the bulk material feeder (140) and wetting apparatus (120) are configured and disposed so that bulk material to be fed comes into contact with water dispensed from the wetting apparatus (120) on a part of the bulk material feed run (141) and is guided on a path of movement corresponding to an essentially free falling movement of the bulk material on this part of the bulk material feed run (141), and
- the bulk material container (110) is closed in an air-tight arrangement with the exception of the outlet through the bulk material chute (142) so that air blown into the bulk material container (110) from the air supply apparatus (130) can only leave the bulk material container (110) again through the zigzag vibrating conveyor (143) disposed in the bulk material chute (142) in a direction opposite the bulk material feed run (141).

2. Device as claimed in the preceding claim, **characterised by** an air cooling device (440) for cooling air to be supplied by means of the air supply apparatus (130).

3. Device as claimed in the preceding claim, **characterised in that** the air cooling device (440) comprises an air drying device for drying the air to be supplied by means of the air supply apparatus (440).

4. Device as claimed in one of the preceding claims, **characterised by** an air discharge apparatus.

5. Device as claimed in the preceding claim, **characterised in that** the wetting apparatus (120), air discharge apparatus and air cooling device (440) are disposed and configured so that an air outlet of the air discharge apparatus is connected to an air inlet of the air cooling device (440) and a water outlet of the air cooling device (440) is connected to a water inlet of the wetting apparatus (120).

6. Device as claimed in one of the two preceding claims, **characterised in that** the air supply apparatus (130), air discharge apparatus and air cooling device (440) are disposed and configured so that an air outlet of the air discharge apparatus is connected to an air inlet of the air cooling device (440) and an air outlet of the air cooling device (440) is connected to an air inlet of the air supply apparatus (130).

7. Device as claimed in one of the preceding claims, **characterised by** a water cooling device (410, 420) for cooling the water to be supplied by means of the wetting apparatus (120).

8. Device as claimed in the preceding claim, **characterised in that** the air cooling device (440) and wetting apparatus (120) are disposed and configured so that a water outlet of the air cooling device (440) is connected to a water inlet of the wetting apparatus (120), in which case the water outlet of the air cooling device (440) is preferably connected via a water cooling device (410, 420) to the water inlet of the wetting apparatus (120).

9. Device as claimed in one of the preceding claims, **characterised by** a water cooling circuit, in which the following components are disposed in series:
- a fresh water tank (450),
- preferably a pre-cooler (410),
- a chiller (420),
- a cold water tank (430) and
- an air cooling device (440),
and the water cooling circuit and its components are configured and disposed so that a water inlet of the air cooling device (440) is connected to a water outlet of the cold water tank (430) and/or a water outlet of the air cooling device (440) is connected to a water inlet of the fresh water tank (450) and/or a water outlet of the cold water tank (430) is connected to a water inlet of the wetting apparatus (130).

10. Method of producing concrete, whereby bulk material, namely aggregates for producing concrete, are cooled by evaporation, the cooling process comprising the following steps:
- storing bulk material in a bulk material container (110),
- wetting bulk material with water,
- feeding bulk material across a bulk material feed run (141) in a bulk material chute (142) extending upwards from the bulk material container (110) and in which a zigzag vibrating conveyor (143) is disposed, and bulk material to be fed is guided on a path of movement corresponding to an essentially free falling movement of the bulk material on several parts of the bulk material feed run (141), and
- feeding air into the bulk material container (110),
- and the step of wetting takes place on at least a part of the bulk material feed run (141) and the bulk material is guided on a path of movement which corresponds to an essentially free falling movement of the bulk material on this part of the bulk material feed run (141), and
- the bulk material container (110) is closed in an air-tight arrangement with the exception of the outlet through the bulk material chute (142) so that air can only leave the bulk material container (110) again through the zigzag vibrating conveyor (143) disposed in the bulk material chute (142) in a direction opposite the bulk material feed run (141).

11. Method as claimed in the preceding claim, **characterised by** the step:
- cooling the discharged air,
preferably further **characterised in that** cooling the discharged air also includes drying the discharged air.

12. Method as claimed in the preceding claim, **characterised by** the step:
- using the cooled discharged air for supplying air.

13. Method as claimed in one of the two preceding claims, **characterised by** the step:
- using water occurring during cooling of the discharged air for wetting bulk material.

14. Method as claimed in the preceding claim,
**characterised in that** the water occurring during cooling of the discharged air and/or used for wetting bulk material is cooled.

15. Retrofit kit for adding to an existing aggregate processing plant, in particular a plant for producing concrete, with a device for cooling bulk material, in particular aggregates for producing concrete, **characterised in that** the retrofit kit comprises retrofit components corresponding to the features of the apparatus for cooling bulk material as claimed in claim 1, and
the retrofit kit preferably also incorporates the features as claimed in one of claims 2 to 9.

## Revendications

1. Dispositif mobile pour la fabrication du béton, comportant un dispositif de refroidissement pour le refroidissement par vaporisation du matériau en vrac, à savoir des granulats pour la fabrication du béton, ledit dispositif de refroidissement (100) comportant un réservoir pour matériaux en vrac (110), un dispositif de mouillage (120) et un dispositif d'acheminement d'air (130),
- ledit dispositif de refroidissement (100) étant disposé dans un cadre qui correspond à un conteneur normalisé, et
- ledit dispositif de refroidissement (100) comportant un dispositif d'acheminement des matériaux en vrac (140) destiné à acheminer les matériaux en vrac dans le réservoir pour matériaux en vrac (110) via une ligne d'acheminement des matériaux en vrac (141), comportant un puits d'acheminement des matériaux en vrac (142), qui s'étend vers le haut à partir du réservoir pour matériaux en vrac (110) et dans lequel est disposé un convoyeur à vibrations en zigzag (143), le matériau en vrac à acheminer étant guidé sur plusieurs parties de la ligne d'acheminement des matériaux en vrac (141) sur une voie de déplacement qui correspond à une chute sensiblement libre des matériaux en vrac,
- le dispositif d'acheminement des matériaux en vrac (140) et le dispositif de mouillage (120) étant configurés et disposés de telle sorte que le matériau en vrac à acheminer entre en contact avec l'eau sortant du dispositif de mouillage (120) sur au moins une partie de la ligne d'acheminement des matériaux en vrac (141), et est guidé sur ladite partie de la ligne d'acheminement des matériaux en vrac (141) sur une voie de déplacement qui correspond à une chute sensiblement libre des matériaux en vrac,
- le réservoir pour matériaux en vrac (110), à l'exception de la sortie à travers le puits d'acheminement des matériaux en vrac (142), est fermé de manière étanche à l'air, de telle sorte que l'air, insufflé par le dispositif d'acheminement d'air (130) dans le réservoir pour matériaux en vrac (110), ne peut ressortir du réservoir pour matériaux en vrac (110) dans une direction opposée à la ligne d'acheminement des matériaux en vrac (141) uniquement au moyen du convoyeur à vibrations en zigzag (143) disposé dans le puits d'acheminement des matériaux en vrac (142).

2. Dispositif selon la revendication précédente, **caractérisé par** un dispositif de refroidissement d'air (440) destiné à refroidir l'air acheminé par le dispositif d'acheminement d'air (130).

3. Dispositif selon la revendication précédente, **caractérisé en ce que** le dispositif de refroidissement d'air (440) comporte un dispositif de séchage de l'air destiné à sécher l'air à acheminer au moyen du dispositif d'acheminement d'air (440).

4. Dispositif selon la revendication précédente, **caractérisé par** un dispositif d'évacuation d'air.

5. Dispositif selon la revendication précédente, **caractérisé en ce que** le dispositif de mouillage (120), le dispositif d'évacuation d'air et le dispositif de refroidissement d'air (440) sont disposés et configurés de telle sorte qu'une sortie d'air du dispositif d'évacuation d'air est reliée à une entrée d'air du dispositif de refroidissement d'air (440) et une sortie d'eau du dispositif de refroidissement d'air (440) est reliée à une entrée d'eau du dispositif de mouillage (120).

6. Dispositif selon l'une des deux revendications précédentes, **caractérisé en ce que** le dispositif d'acheminement d'air (130), le dispositif d'évacuation d'air et le dispositif de refroidissement d'air (440) sont disposés et configurés de telle sorte qu'une sortie d'air du dispositif d'évacuation d'air est reliée à une entrée d'air du dispositif de refroidissement d'air (440) et une sortie d'air du dispositif de refroidissement d'air (440) est reliée à une entrée d'air du dispositif d'acheminement d'air (130).

7. Dispositif selon l'une quelconque des revendications précédentes, **caractérisé par** un dispositif de refroidissement d'eau (410, 420) destiné à refroidir l'eau acheminé au moyen du dispositif de mouillage (120).

8. Dispositif selon la revendication précédente, **caractérisé en ce que** le dispositif de refroidissement d'air (440) et le dispositif de mouillage (120) sont disposés et configurés de telle sorte qu'une sortie d'eau du dispositif de refroidissement d'air (440) est reliée à une entrée d'eau du dispositif de mouillage (120), de préférence, ladite sortie d'eau du dispositif de refroidissement d'air (440) étant reliée à l'entrée d'eau du dispositif de mouillage (120) via un dispositif de refroidissement d'eau (410, 420).

9. Dispositif selon l'une quelconque des revendications précédentes, **caractérisé par** un circuit de refroidissement d'eau, dans lequel sont disposés en série les composants suivants :
- une cuve d'eau d'appoint (450),
- de préférence, un pré-refroidisseur (410),
- un refroidisseur (420),
- une cuve d'eau froide (430) et
- un dispositif de refroidissement d'air (440),
ledit circuit de refroidissement d'eau et ses composants étant configurés et disposés de telle sorte qu'une entrée d'eau du dispositif de refroidissement d'air (440) est reliée à une sortie d'eau de la cuve d'eau froide (430), et/ou une sortie d'eau du dispositif de refroidissement d'air (440) est reliée à une entrée d'eau de la cuve d'eau d'appoint (450), et/ou une sortie d'eau de la cuve d'eau froide (430) est reliée à une entrée d'eau du dispositif de mouillage (130).

10. Procédé pour la fabrication du béton, dans lequel le matériau en vrac, à savoir les granulats pour la fabrication du béton, est refroidi par vaporisation, le refroidissement comportant les étapes :
- stockage du matériau en vrac dans un réservoir pour matériaux en vrac (110),
- mouillage du matériau en vrac avec de l'eau,
- acheminement du matériau en vrac via une ligne d'acheminement des matériaux en vrac (141) vers un puits d'acheminement des matériaux en vrac (142), qui s'étend vers le haut à partir du réservoir pour matériaux en vrac (110), et dans lequel est disposé un convoyeur à vibrations en zigzag (143), le matériau en vrac à acheminer étant guidé sur plusieurs parties de la ligne d'acheminement des matériaux en vrac (141) sur une voie de déplacement qui correspond à une chute sensiblement libre des matériaux en vrac, et
- acheminement de l'air dans le réservoir pour matériaux en vrac (110),
- l'étape de mouillage étant exécutée sur au moins une partie de la ligne d'acheminement des matériaux en vrac (141), et le matériau en vrac étant guidé sur ladite partie de la ligne d'acheminement des matériaux en vrac (141) sur une voie de déplacement qui correspond à une chute sensiblement libre des matériaux en vrac, et
- le réservoir pour matériaux en vrac (110), à l'exception de la sortie à travers le puits d'acheminement des matériaux en vrac (142), est fermé de manière étanche à l'air, de telle sorte que l'air ne peut ressortir du réservoir pour matériaux en vrac (110) dans une direction opposée à la ligne d'acheminement des matériaux en vrac (141) uniquement au moyen du convoyeur à vibrations en zigzag (143) disposé dans le puits d'acheminement des matériaux en vrac (142).

11. Procédé selon la revendication précédente, **caractérisé par** l'étape :
- refroidissement de l'air évacué,
de préférence, caractérisé également en ce que le refroidissement de l'air évacué englobe aussi le séchage de l'air évacué.

12. Procédé selon la revendication précédente, **caractérisé par** l'étape :
- utilisation de l'air évacué refroidi pour l'acheminement de l'air.

13. Procédé selon l'une des deux revendications précédentes, **caractérisé par** l'étape :
- utilisation de l'eau, produite pendant le refroidissement de l'air évacué, pour le mouillage du matériau en vrac.

14. Procédé selon la revendication précédente, **caractérisé en ce que** l'eau, produite pendant le refroidissement de l'air évacué, est refroidie avant et/ou pendant son utilisation pour le mouillage du matériau en vrac.

15. Ensemble de post-équipement permettant de parachever une installation existante de traitement des granulats, en particulier une installation pour la fabrication du béton, comportant un dispositif pour le refroidissement du matériau en vrac, en particulier des granulats pour la fabrication du béton, **caractérisé en ce que** l'ensemble de post-équipement comporte des composants de post-équipement qui correspondent aux caractéristiques du dispositif pour le refroidissement des matériaux en vrac selon la revendication 1, ledit ensemble de post-équipement comportant également, de préférence, les caractéristiques selon l'une quelconque des revendications 2 à 9.
